(19) Europäisches Patentamt
European Patent Office
Office européen des brevets

(11) **EP 3 219 763 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
*C09C 1/00* (2006.01)          *C09C 1/24* (2006.01)
*C09D 17/00* (2006.01)

(21) Anmeldenummer: **16160645.4**

(22) Anmeldetag: **16.03.2016**

(54) **VERWENDUNG VON EISENOXID-ROT-PIGMENTEN IN WÄSSRIGEN PRÄPARATIONEN**

USE OF IRON OXIDE RED PIGMENTS IN AQUEOUS PREPARATIONS

UTILISATION DE PIGMENTS ROUGES D'OXYDE DE FER DANS DES PREPARATIONS AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.09.2017 Patentblatt 2017/38**

(73) Patentinhaber: **LANXESS Deutschland GmbH 50569 Köln (DE)**

(72) Erfinder:
• **Spiegelhauer, Stephan**
  **40764 Langenfeld (DE)**
• **Rosenhahn, Carsten Dr.**
  **47906 Kempen (DE)**
• **Czaplik, Waldemar Dr.**
  **41748 Viersen (DE)**
• **Kischkewitz, Jürgen Dr.**
  **40883 Ratingen (DE)**

(56) Entgegenhaltungen:
**EP-A1- 1 293 480          WO-A1-2013/045608
WO-A1-2016/038152          WO-A2-2010/012685
DE-A1- 19 540 557**

**Beschreibung**

Die vorliegende Erfindung betrifft die Verwendung von speziellen Eisenoxid-Rot-Pigmenten zur Herstellung (Einfärbung) von wässrigen Titandioxid-haltigen Präparationen, entsprechende Präparationen.

Eisenoxide finden in vielen technischen Bereichen Anwendung. So werden sie beispielsweise als Farbpigmente in Keramiken, Baustoffen, Kunststoffen, Farben, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Eisenoxide lassen sich durch Fällungs-, Hydrolyse- und Zersetzungsreaktionen von Eisensalzen erhalten. Die mit Abstand größte industrielle Bedeutung haben die Laux-, Copperas-, Fäll-, Calzinier- und Penniman-Rot-Verfahren.

Die wässrige Herstellung von feinteiligem Hämatit, der der Modifikation $\alpha$-Fe$_2$O$_3$ entspricht, ist jedoch deutlich aufwändiger. Durch Verwendung eines Reifungsschritts lässt sich unter Zugabe eines feinteiligen Eisenoxids der Modifikation Maghämit, $\gamma$-Fe$_2$O$_3$, oder Lepidocrocite, $\gamma$-FeOOH, als Keim auch durch eine direkte wässrige Fällung Hämatit herstellen [US 5,421,878; EP0645437A; WO 2009/100767A].

Eine weitere Methode zur Herstellung von Eisenoxid-Rot-Pigmenten ist das sogenannte Penniman-Rot-Verfahren, auch Nitrat-Verfahren oder Direkt-Rot-Verfahren genannt (US 1,327,061; US 1,368,748; US 2,937,927; EP 1106577A: US 6,503,315). Dabei werden Eisenoxidpigmente dadurch hergestellt, dass Eisenmetall unter Zusatz eines Eisensalzes und eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf Eisen einwirkt. Hierbei entsteht eine Hämatit-Keimsuspension. Diese wird auf an sich bekannte Weise zu einer Suspension von Rotpigment aufgebaut, das Pigment wird aus dieser Suspension, falls gewünscht, auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. Die 130er-Norm entspricht dem für Eisenoxidpigment-Farbmessungen gebräuchlichem Referenzstandard Bayferrox® 130 (Produkt der LANXESS Deutschland GmbH, Deutschland).

EP 1106577A offenbart eine Variante des Penniman-Rot-Verfahrens umfassend die Einwirkung von verdünnter Salpetersäure auf Eisen bei erhöhter Temperatur zur Erzeugung von Keimen, d.h. feinteiligen Eisenoxiden mit einer Teilchengröße kleiner als oder gleich 100 nm. Die Reaktion von Eisen mit Salpetersäure ist eine komplexe Reaktion und kann je nach Versuchsbedingungen entweder zu einer Passivierung des Eisens und damit zu einem Stillstand der Reaktion führen oder zu einem Auflösen des Eisens unter Bildung von gelöstem Eisennitrat. Beide Reaktionswege sind nicht erwünscht, und die Herstellung von feinteiligem Hämatit gelingt damit nur unter eingeschränkten Versuchsbedingungen. EP 1106577A beschreibt derartige Bedingungen zur Herstellung von feinteiligem Hämatit. Dabei wird das Eisen mit verdünnter Salpetersäure bei Temperaturen zwischen 90 und 99°C zur Reaktion gebracht.

WO 2013/045608 beschreibt ein Verfahren zur Herstellung von Eisenoxid-Rot-Pigmenten, bei dem der Reaktionsschritt der Herstellung der Keime, d.h. von feinteiligem Hämatit mit einer Teilchengröße kleiner als oder gleich 100 nm, verbessert wurde.

Bei dem Nitrat-Verfahren gemäß dem Stand der Technik wird üblicherweise Eisen oder eine Mischung aus Eisen und Wasser vorgelegt. Dann wird üblicherweise die Hämatit-Keimsuspension zu zumindest Eisen, und anschließend Eisen(II)nitratlösung zu der Mischung zugegeben. Die Umsetzung beginnt üblicherweise, nachdem die Temperatur der Reaktionsmischung erhöht wurde, auf 70 bis 99°C, und nachdem die Begasung mit einem sauerstoffhaltigem Gas begonnen wurde. Wäsrige Pigmentpräparationen Titandioxid- und Eisenoxidrotpigmente enthaltend, sind aus den Druckschriften DE 195 40 557 A, WO 2010/012685 und EP 1 293 480 A bekannt.

In allen Anwendungen zur Einfärbung von Lacken, Dispersionsfarben, Beschichtungen, Kunststoffen, Baustoffen, Papier, in Lebensmitteln sowie in Produkten der Pharmaindustrie sind Eisenoxidrotpigmente gefragt, deren Rotanteil a* (gemessen im Gemisch mit Weißpigmenten - genannt Aufhellung - nach CIELAB) besonders ausgeprägt ist. Je höher der für die Einfärbung bestimmte Rotanteil a* ausfällt, um so farbreiner erscheint der Rotfarbton des eingefärbten Mediums (beispielweise Lack, Kunststoff, Beschichtungen, Baustoff, Papier). So wird in der Dispersionsfarbenindustrie die Forderung gestellt, dass die Einarbeitung der Eisenoxidrotpigmente in ein Dispersionsfarbensystem zur stets gleichen Farbtongebung führt, die möglichst unabhängig von der Dauer der Einarbeitung sein soll. Die Einarbeitung des Eisenoxidrotpigmentes in ein Dispersionsfarbensystem erfolgt in technischen Anlagen, wie z.B. Perlmühlen unter Einwirkung mechanischer Kräfte auf das Pigment, wobei diese Mahlung ggf. Stunden beansprucht. Ein hohes Maß an Farb- bzw. Qualitätskonstanz ist gegeben, wenn sich die Farbgebung des Eisenoxidrotpigmentes bei Schwankungen in der Einarbeitungszeit möglichst nur geringfügig ändert. Je geringer die Farbtonänderung bei Verlängerung der Einarbeitungszeit desto mahlstabiler wird das Eisenoxidrotpigment bezeichnet. Ein Maß für die Farbkonstanz ist der Gesamtfarbabstand $\Delta$Eab*, der sich ergibt, wenn man den Farbton von zwei Dispersionsfarbenanreibungen vergleicht, die aus den gleichen Dispersionsfarben- und Pigmentrohstoffen in der gleichen technischen Anlage bei unterschiedlich langen Einarbeitungszeiten gewonnen wurden. Hier ist gefordert, dass der resultierende Gesamtfarbabstand ∆Eab* so gering wie möglich ist.

Der Gesamtfarbabstand ∆Eab* wird nach CIELAB in Anlehnung an DIN EN ISO 11664-4:2011-07 und DIN EN ISO 787-25:2007 aus der Helligkeit L*, dem Rotwert* und dem Gelbwert b* nach folgender Formel ermittelt:

$$\Delta \text{Eab*} \quad = \quad [(\Delta L^*)^2 + (\Delta a^*)^2 + (\Delta b^*)^2]^{1/2}$$

Der vorliegenden Erfindung lag daher die Aufgabe zugrunde, Eisenoxid-Rot-Pigmente zur Verfügung zu stellen, von denen bei der Einfärbung von Medien wie Beton, Kunststoffen, Farben und Lacken geringere Mengen als von Pigmenten des Standes der Technik benötigt werden, um denselben Rot-Ton zu erreichen, oder mit denen ein intensiverer Farbton erreicht wird, wenn bei der Einfärbung eine gleichen Menge davon wie von einem Pigment nach dem Stand der Technik verwendet wird, wobei diese Eigenschaft sowohl bei intensiver Färbung des Mediums als auch bei schwächerer Färbung durch Verdünnung mit helleren Pigmenten wie Weißpigmenten vorhanden ist und darüber hinaus eine hohe Mahlstabilität aufweisen.

Für die Messung der Farbintensität von Eisenoxid-Rot-Pigmenten gibt es seit langem etablierte Testmethoden, bei denen die Farbigkeit von mit dem Eisenoxid-Rot-Pigmenten eingefärbten Medien wie Beton-Prüfkörper oder Lacksystem gemessen werden. Als Standard-Parameter zur Messung der Farbigkeit von Eisenoxid-Rot-Pigmenten im Lacksystem haben sich die Parameter des sogenannten CIELAB-Farbraums etabliert. Die Grundlagen hierfür sind in der Norm DIN EN ISO 11664-4 " Farbmetrik - Teil 4: CIE 1976 L*a*b* Farbenraum" (Beuth-Verlag, Ausgabe 2011-07) festgelegt. Jede wahrnehmbare Farbe in diesem dreidimensionalem Farbraum ist durch den Farbort mit den Koordinaten L* (Helligkeit), a* (Rot-Grün-Wert) und b* (Gelb-Blau-Wert) definiert. In Anwendung der Gegenfarbentheorie liegen sich hier Grün und Rot auf der a*-Achse und die Farben Gelb-Blau auf der b*-Achse gegenüber. Je positiver ein a*-Wert ist, desto stärker ist die Farbe Rot ausgeprägt. Die Farbe Grün ist dagegen umso stärker ausgeprägt, je negativer der a*-Wert ist. Auf der senkrecht zur a*-Achse liegenden b* Achse verhält sich dies analog zu den Gegenfarben Gelb-Blau. Je positiver ein b*-Wert ist, desto stärker ist die Farbe Gelb ausgeprägt. Die Farbe Blau ist dagegen umso stärker ausgeprägt, je negativer der b*-Wert ist. Die L*-Achse steht senkrecht auf Ebene, die durch die Koordinaten a* und b* gebildet wird und gibt die Helligkeit wieder. Die L*-Achse wird auch als Neutralgrauachse bezeichnet. Sie umfasst die Endpunkte Schwarz (L=0) und Weiß (L=100). Neben diesen Parametern wird auch oft die Farbsättigung C* (auch Chroma, Chromatizität oder Buntheit) angegeben. Dieser Wert ergibt sich direkt aus den Werten a* und b* und stellt die Quadratwurzel der Summe der Quadrate von a* und b* dar. a*, b*, L*, und C* sind dimensionslose Werte. Üblicherweise wird aber die Dimension CIELAB-Einheiten in diesem Zusammenhang verwendet.

Bei der Farbmessung von Eisenoxid-Rot-Pigmenten hat sich die Messung in einer sogenannten Abtestung in einem thixotropierten langöligen Alkydharz (nach DIN EN ISO 11664-4:2011-07 und DIN EN ISO 787-25:2007, wobei in Abweichung hierzu eine langöliges Alkydharz mit einem Ölgehalt von 64 Gew.% anstatt 63 Gew.% und ein anderes Thixotropierungsmittel verwendet wird. Details sind in dem Abschnitt Beispiele und Methoden angegeben) als besonders aussagekräftig erwiesen. Dieser Test wird erfindungsgemäß als Lackabtestung bezeichnet. Das Alkydharz hat den Vorteil, dass es nicht trocknet. So sind Messungen schneller möglich, als wenn die Paste vor der Messung erst ausgetrocknet sein muss. Weitere Einzelheiten zu dieser Testmethode sind in dem Abschnitt Beispiele und Methoden angegeben. Dieser Test wird auch zur Spezifizierung von industriell hergestellten Rotpigmenten, zum Beispiel von denen der LANXESS Deutschland GmbH, eingesetzt. Hier werden, wie in der Pigmentindustrie üblich, neben den Absolutwerten a*, b* und L* auch Differenzwerte ∆a*, ∆b* und ∆L* angegeben. Diese Differenzwerte werden durch Vergleich der Werte der zu messenden Probe mit einem Referenzstandard ermittelt und stellen die Differenz Wert(Probe) minus Wert(Referenz) dar. Die Referenzstandards selbst werden wieder untereinander verglichen und tragen eindeutige Chargennummern, sodass neben dem Vergleich der Absolutwerte a*, b* und L* auch immer ein direkter Vergleich zwischen Proben und Referenzstandards unterschiedlicher Generationen möglich ist, selbst wenn die ursprüngliche Referenzprobe nicht mehr verfügbar ist. Ein weiterer Parameter zur Vergleichsmessung ist der Farbabstand ∆E*. Dieser wird aus den Differenzwerten ∆a*, ∆b* und ∆L* ermittelt und stellt die Quadratwurzel der Summe der Quadrate von ∆a*, ∆b* und ∆L* dar.

Für die Durchführung der Lackabtestung gibt es zwei Varianten, nämlich die Messung im Purton und in der Aufhellung. Bei der Purton-Messung wird das Pigment in einer Klarpaste unter in der Norm definierten Standardbedingungen dispergiert. Die Farbwerte der pigmentierten Farbpaste werden dann bestimmt. Bei der Messung in Aufhellung wird der Paste Titandioxid in der Modifikation Rutil zugeben, sodass ein Verhältnis von Pigment zu Titandioxid von 1:5 erreicht wird. Durch die Aufhellung kann die Bewertung der Farbstärke und Farbreinheit eines Pigments noch unter dem Vorhandensein eines Weißpigments, das die Farbe aufhellt, beurteilt werden.

Für die Lackindustrie besonders farbreine Eisenoxid-Rot-Pigmente mit einem a*-Wert im Purton von 29 bis 30,5 CIELAB Einheiten können über das Copperas, Fäll- und Penniman-Rot Verfahren hergestellt werden. Diese zeichnen sich im Purton in einem der Lackabtestung durch den besonderen Rot- und Gelbstich aus und die Farbsättigung C* beträgt bis zu 40,0 CIELAB Einheiten. In der Aufhellung, also in der oben beschriebenen Mischung mit Titandioxid, zeigen sie jedoch eine deutliche Abnahme im Rotstich, also niedrigere a*-Werte. Aus anwendungstechnischer Sicht wäre es jedoch besonders vorteilhaft, Eisenoxid-Rot Pigmente verfügbar zu haben, die einen sehr hohen Rotstich sowohl im Purton als auch in der Aufhellung als Gemisch mit Titandioxid aufweisen. Als besonders gut geeigneter Parameter um das Verhalten des Rot-Stiches im Purton und Aufhellung zu beschreiben, wird daher die Summe aus den a*-Werten aus Purton und Aufhellung definiert. Vergleicht man verschiedene kommerziell erhältliche Produkte bezüglich dieses Parameters, zeigt sich, dass die Summe aus a*(Purton) und a*(Aufhellung) deutlich unter 58,0 CIELAB-Einheiten liegt.

In der folgenden Tabelle 1 sind die Farbwerte in der Lackabtestung im Purton und in der Aufhellung von unterschiedlichen kommerziell verfügbaren Pigmenten angeführt.

Tabelle 1: Farbwerte von Eisenoxid-Rotpigmenten nach dem Stand der Technik

| Eisenoxid | a* Purton | b* Purton | C* Purton | a* Aufhellung | b* Aufhellung | C* Aufhellung | Summe a* Purton + a* Aufhellung) |
|---|---|---|---|---|---|---|---|
| R1599D [1] | 30,5 | 24,8 | 39,3 | 27,2 | 18,8 | 33,1 | 57,7 |
| R1299D [1] | 30,3 | 24,9 | 39,2 | 27,4 | 20,1 | 34,0 | 57,7 |
| SILO208 [2] | 29,7 | 23,8 | 38,0 | 26,1 | 17,4 | 31,4 | 55,8 |
| Bayferrox® 105 [3] | 29,5 | 24,5 | 38,4 | 25,9 | 18,1 | 31,6 | 55,4 |
| Bayferrox®110 [3] | 28,4 | 23,0 | 36,6 | 25,6 | 17,8 | 31,2 | 54,0 |
| Penniman Red 808 [4] | 29,3 | 25,2 | 38,7 | 28,2 | 24,7 | 37,5 | 57,5 |
| Penniman Red NS110 [4] | 29,7 | 24,5 | 38,5 | 27,2 | 21,2 | 34,4 | 56,9 |
| Pigment analog Beispielen 3 und 4 aus DE4235947A [5] | 30,0 | 25,2 | 39,2 | 27,1 | 20,2 | 33,8 | 57,1 |
| Pigment analog Beispielen 3 und 4 [5]DE4235947A [5] | 28,8 | 26,4 | 39,1 | 27,8 | 25,7 | 37,9 | 56,6 |

[1] Copperas® Pigment der Rockwood Pigments NA, Inc., hergestellt nach dem Copperas®-Prozess
[2] Ferroxide™ Pigment der Rockwood Pigments NA, Inc., hergestellt nach dem Fällungsprozess
[3] Pigmente der LANXESS Deutschland GmbH, hergestellt nach dem Laux-Prozess über einen Kalzinierungsschritt.
[4] Pimente der Yixing Yuxing Industry and Trading Company, hergestellt nach dem Penniman-Rot-Verfahren (),
[5] Pigmente hergestellt nach dem Fällungsverfahren. Die Beispiele wurden analog Beispielen 3 und 4 der DE 4235947A hergestellt und deren Farbwerte wurden in der Lackabtestung im Purton und in der Aufhellung gemessen.

Gegenstand der Erfindung ist die Verwendung eines Hämatit-Pigments dessen Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 beträgt zur Herstellung einer wässrigen, Titandioxid-haltigen Präparation, enthaltend

50 bis 60% des Hämatit Pigments und Titandioxid,
8 bis 25% Bindemittel,
0,2 bis 1% Dispergiermittel,
0,5 bis 1% Hilfsstoffe und

Rest Wasser.

**A) Hämatit-Pigment**

In einer bevorzugten Ausführungsform umfasst die erfindungsgemäßen Pigmente, deren Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 CIELAB Einheiten beträgt, sowie eine organische Beschichtung, bevorzugt mit Ölen, Wachsen, Fettsäuren oder Fettsäuresalzen, und/oder eine anorganische Beschichtung, bevorzugt mit anorganischen Salzen wie Carbonaten, Oxiden oder Hydroxiden von Alkali- und Erdalkalimetallen oder von Mg, Zn, Al, La, Y, Zr, Sn und/oder Ca oder jeweils nicht.

Die bevorzugten Hämatit-Pigmente weisen die Modifikation $\alpha$-$Fe_2O_3$ auf. In einer weiteren bevorzugten Ausführungsform umfassen sie eine Teilchengröße von 0,1 bis 0,3 $\mu$m. Besonders bevorzugt weisen zumindest 80 Gew. % der bevorzugten Hämatit-Pigmente eine Teilchengröße von 0,1 bis 0,3 $\mu$m auf.

Weiter bevorzugt weisen die Hämatit-Pigmente eine Ölzahl von 15 bis 26, bevorzugt von 15 bis 24, gemessen nach DIN EN ISO 787-5: 1995, auf.

Ebenfalls bevorzugt besitzen die Hämatit-Pigmente einen Wassergehalt von 1,0 Gew.% oder mehr, bevorzugt von 1,0 bis 5,0 Gew.% auf. Das Wasser liegt besonders bevorzugt als Kristallwasser vor.

Auch bevorzugt besitzen Hämatit-Pigmente einen Chloridgehalt von 0,001 bis 0,1 Gew.% Chlorid auf. Mit Chloridgehalt ist erfindungsgemäß der Gesamtgehalt an Chlorid im Hämatit Pigment gemeint.

Besonders bevorzugt sind solche Hämatit-Pigmente, die die Modifikation $\alpha$-$Fe_2O_3$ aufweisen, eine Teilchengröße von 0,1 bis 0,3 $\mu$m, ganz besonders bevorzugt zumindest 80 Gew. % der Hämatit-Pigmente eine Teilchengröße von 0,1 bis 0,3 $\mu$m aufweise und eine Ölzahl von 17 bis 26, bevorzugt von 19 bis 24, gemessen nach DIN EN ISO 787-5: 1995 besitzen und vorzugsweise einen Wassergehalt von 1,0 Gew.% oder mehr, bevorzugt von 1,0 bis 5,0 Gew.% aufweisen.

## Herstellung der Hämatit Pigmente

Die Hämatit-Pigmente werden bevorzugt durch Umsetzung von Eisen mit einer wässrigen Hämatit-Keimsuspension und einer Eisen(II)salzlösung, bevorzugt Eisen(II)nitrat-Lösung, in Gegenwart von zumindest einem sauerstoffhaltigen Gas, dem sogenannten Penniman-Rot-Verfahren, hergestellt. In einer weiteren bevorzugten Ausführungsform werden die Hämatit-Pigmente nach einem Verfahren hergestellt, das einen Kalzinierungsschritt bei Temperaturen von größer als 600°C ausschließt.

In einer weiteren Ausführungsform umfasst das Herstellungsverfahren zumindest die Umsetzung von Eisen, Hämatit-Keimsuspension, enthaltend Hämatit-Keime, die eine Teilchengröße von 100 nm oder weniger und eine spezifische BET-Oberfläche von 40 $m^2$/g bis 150 $m^2$/g (gemessen nach DIN 66131) aufweisen, und Eisen(II)nitratlösung in Gegenwart von zumindest einem sauerstoffhaltigen Gas bei Temperaturen von 70 bis 99°C, dadurch gekennzeichnet, dass die Umsetzung während der Begasung mit einem sauerstoffhaltigem Gas in einem pH-Bereich von pH 2,2 bis pH 4,0, bevorzugt von pH 2,2 bis pH 3,0 stattfindet, wobei eine Hämatit-Pigmentsuspension erzeugt wird.

In einer bevorzugten Ausführungsform findet die Umsetzung zumindest in den ersten 40 Stunden während der Begasung mit einem sauerstoffhaltigem Gas, bevorzugt für mehr als 80% der ersten 40 Stunden während der Begasung in einem pH-Bereich von pH 2,2 bis pH 4,0, bevorzugt von pH 2,2 bis pH 3,0 statt.

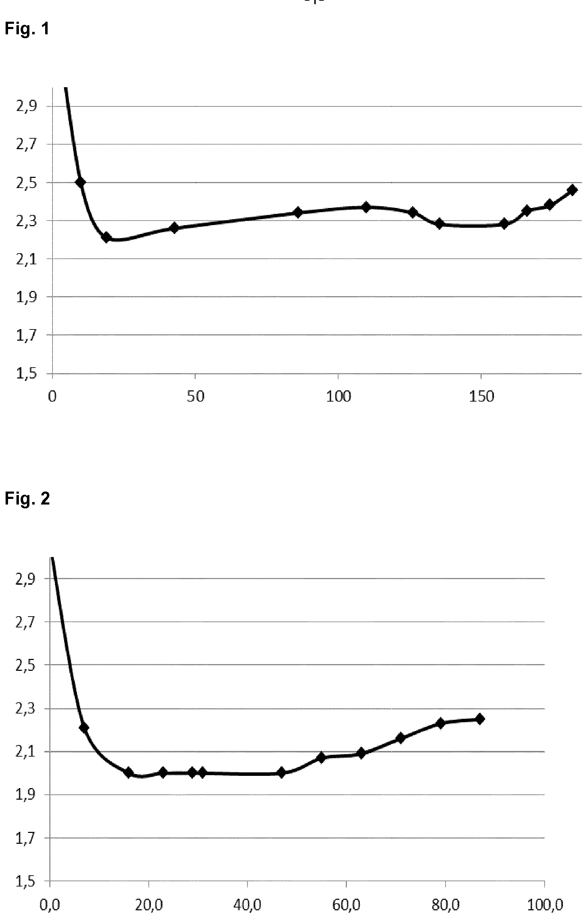

Überraschenderweise gelingt die Regulierung des pH-Wertes der Reaktionssuspension dadurch, dass neben dem sauerstoffhaltigem Gas zusätzlich gasförmiger Stickstoff in die Reaktionsmischung, bevorzugt in die flüssige Phase, eingeleitet wird. Dies kann entweder während der gesamten Reaktionszeit, beispielsweise mit unterschiedlichen Volumina / Stunde Reaktionszeit, oder bevorzugt nur dann erfolgen wenn der pH-Wert der Reaktionsmischung unter 2,2 sinkt. Bevorzugt enthält der gasförmige Stickstoff von 0 bis 10 Vol.% Sauerstoff, bevorzugt von 0 bis 1 Vol. % Sauerstoff. Ebenfalls bevorzugt enthält das sauerstoffhaltige Gas von 15 bis 100 Vol.% Sauerstoff. Bevorzugt wird so viel gasförmiger Stickstoff in die Reaktionsmischung eingeleitet, dass der Sauerstoffgehalt bezogen auf das Gesamtvolumen von sauerstoffhaltigem Gas und gasförmigem Stickstoff von 0 bis 15 Vol.%, bevorzugt von 0 bis 10 Vol.% beträgt. Dabei kann die Einleitung des gasförmigen Stickstoffs derart erfolgen, dass die Einleitung des sauerstoffhaltigen Gases entweder fortgeführt oder unterbrochen wird, aber die Summe der Begasungsvolumina mit sauerstoffhaltigem Gas und gasförmigem Stickstoff zumindest 1 $m^3$ Gasvolumen / $m^3$ Ansatzvolumen / Stunde beträgt. Durch die Einleitung von gasförmigem Stickstoff in die Reaktionsmischung steigt der pH-Wert der Reaktionsmischung so schnell an, dass damit der pH-Wert der Reaktionsmischung innerhalb der Grenze von pH 2,2 bis pH 4,0, bevorzugt von pH 2,2 bis pH 3,0 gehalten werden kann. Die Stickstoffeinleitung wird erfindungsgemäß nach Erreichen der oberen pH-Grenze von mehr als pH 4,0, bevorzugt mehr als pH 3,0, wieder beendet und erst wieder nach Erreichen der unteren pH-Grenze weniger als pH 2,2, wieder begonnen. In Figur 1 ist ein pH-Profil eines solchen Verfahrens dargestellt. Auf der x-Achse ist die Reaktionszeit und auf der y-Achse ist der pH-Wert der Reaktionsmischung dargestellt.

Eine Verringerung des Begasungsvolumens mit dem sauerstoffhaltigen Gas unter 0,2 Gasvolumen / $m^3$ Ansatzvolumen / Stunde ohne zusätzliche Einleitung von gasförmigem Stickstoff führt hingegen nur kurzfristig zu einer Anhebung des pH-Wertes, führt aber anschließend innerhalb von weniger als einer Stunde aufgrund einer eintretenden Passivierung des in der Reaktionsmischung enthaltenen Eisens zu einem starken Absinken des pH-Wertes auf pH 1,7 oder weniger. Eine Passivierung des Eisens wird durch die Bildung von geschlossenen Eisenhydroxid und Eisenoxid Ablagerungen an der Eisenoberfläche statt Das Eisen wird so oberflächlich vollständig von einer geschlossenen Eisenoxid/Eisenhydroxid Schicht benetzt. Dies führt zur unerwünschten vorzeitigen Beendigung und damit zu einer unvollständigen Umsetzung.

Das pH-Profil einer typischen Umsetzung gemäß dem Penniman-Rot-Verfahren nach dem Stand der Technik ist in Figur 2 dargestellt.

Auf der x-Achse ist die Reaktionszeit und auf der y-Achse ist der pH-Wert der Reaktionsmischung dargestellt. Üblicherweise liegt der pH-Wert der Reaktionsmischung bei 2,5 oder mehr und wird durch die Mischung der sauren Eisen(II)nitratlösung und der sauren Hämatitkeim-Suspension definiert. Nach Beginn der Begasung bei erhöhten Temperaturen, typischerweise bei 70 bis 99°C, sinkt der pH-Wert innerhalb von ca. 20 Stunden auf unter 2,1 ab und steigt dann innerhalb von weiteren 40 Stunden wieder auf einen pH-Wert von 2,1 bis 2,3. In Umsetzungen, die ein solches pH-Profil aufweisen, werden Hämatit-Pigmente erhalten, die eine Summe der a*-Werte im Purton und in der Aufhellung von 57,5 und weniger aufweist.

In einer Ausführungsform wird die Umsetzung so lange durchgeführt, bis das Hämatit-Pigment den gewünschten Farbton in der Lackabtestung, d.h. die entsprechenden a*-Werte im Purton und in der Aufhellung aufweist. Üblicherweise steigen die a*-Werte während der in Umsetzung in Gegenwart von zumindest einem sauerstoffhaltigen Gas bei Temperaturen von 70 bis 99°C an. Daher werden während der Umsetzung zu unterschiedlichen Zeiten Proben gezogen und in der Lackabtestung untersucht. Üblicherweise kann eine Prüfung in der Lackabtestung innerhalb von einer Stunde durchgeführt werden. Innerhalb dieser Zeit können sich die Farbwerte des Hämatit in der Reaktionsmischung wieder leicht ändern. Bei einer großtechnischen Herstellung gemäß des bevorzugten Verfahrens, die erfahrungsgemäß sehr reproduzierbar verläuft, wird aber der Fachmann den optimalen Zeitpunkt zum Abbruch der Reaktion bestimmen können.

In einer weiteren Ausführungsform umfasst das bevorzugte Verfahren die Abtrennung des Hämatit-Pigments von der Hämatit-Pigmentsuspension nach üblichen Methoden.

Die Umsetzung von Eisen, Hämatit-Keimsuspension und Eisen(II)nitratlösung in Gegenwart von zumindest einem sauerstoffhaltigen Gas bei Temperaturen von 70 bis 99°C wird auch Pigmentaufbau genannt.

Die nach dem hergestellten Hämatit-Pigmente weisen die Modifikation Hämatit ($\alpha$-$Fe_2O_3$) auf und werden daher auch im Zusammenhang mit dieser Erfindung Hämatit-Pigmente genannt.

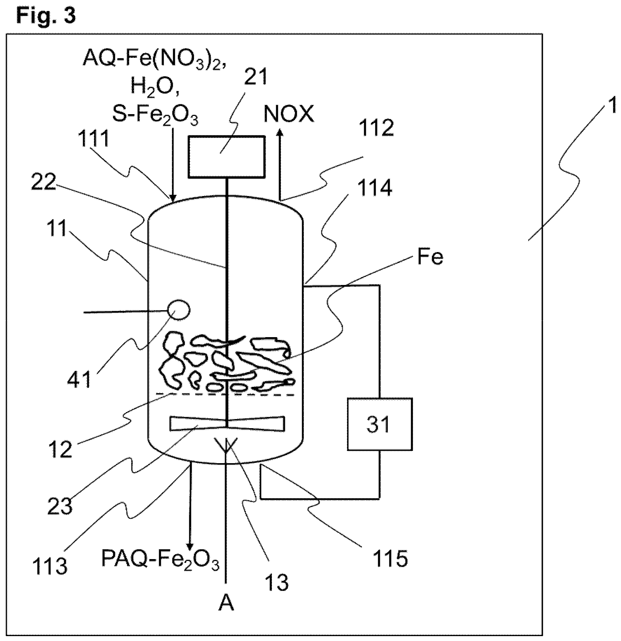

Der Pigmentaufbau gemäß eines solchen Verfahrens wird in einer Ausführungsform in einem Reaktor gemäß Figur 3 durchgeführt.

Die weiteren zur Durchführung des Herstellungsverfahrens geeigneten Vorrichtungen werden nachstehend anhand der Figur 3 näher erläutert.

In Figur 3 ist die Darstellung einer bevorzugt verwendeten Vorrichtung wiedergegeben.

In Figur 3 bedeuten:

| | |
|---|---|
| A | sauerstoffhaltiges Gas |
| Fe | Eisen |
| AQ-$Fe(NO_3)_2$ | Eisen(II)nitrat-Lösung |
| S-$Fe_2O_3$ | Hämatit-Keimsuspension |
| PAQ-$Fe_2O_3$ | Hämatit-Pigmentsuspension |
| $H_2O$ | Wasser |
| NOX | stickoxidhaltiger Stoffstrom (Abgas aus der Herstellung der Hämatit-Pigmentsuspension) |
| 1 | Reaktor zur Herstellung von Hämatit-Pigmentsuspension |
| 11 | Reaktionsbehälter |
| 12 | Vorlage für Eisen |
| 13 | Begasungseinheit |
| 111 | Einlass für Eisen(II)nitrat-Lösung, Hämatit-Keimsuspension |
| 112 | Auslass für NOX |

| 113 | Auslass für Hämatit-Pigmentsuspension |
|-----|----------------------------------------|
| 114 | Auslass für flüssige Phase |
| 115 | Einlass für flüssige Phase |
| 2 | Rühreinrichtung |
| 21 | Antrieb |
| 22 | Verbindung zwischen Antrieb und Rührorgan |
| 23 | Rührorgan |
| 31 | Pumpe |
| 41 | pH-Elektrode |

Reaktor **1** umfasst typischerweise einen oder mehrere Reaktionsbehälter aus Werkstoffen, die gegen die Einsatzstoffe beständig sind. Einfach Reaktionsbehälter können z.B. gemauerte oder geflieste in die Erde eingelassene Behälter sein. Die Reaktoren umfassen beispielsweise auch Behälter aus Glas, salpetersäurebeständigem Kunststoffen, wie z.B. Polytetrafluorethylen (PTFE), Stahl, z.B. emaillierter Stahl, kunststoff- oder lackbeschichteter Stahl, Edelstahl mit der Werkstoffnummer 1.44.01. Die Reaktionsbehälter können offen oder geschlossen sein. In bevorzugten Ausführungsformen sind die Reaktionsbehälter geschlossen. Die Reaktionsbehälter sind typischerweise für Temperaturen zwischen 0 und 150°C und für Drucke von 0,05 MPa bis 1,5 MPa ausgelegt.

Eine bevorzugte Ausführungsform eines Reaktors **1** ist in Figur 1 wiedergegeben. Reaktor **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115,** eine Rühreinrichtung **2** umfassend einen Antrieb **21,** eine Verbindung zwischen Antrieb und Rührorgan **22,** ein Rührorgan **23,** eine Pumpe **31** und eine pH-Elektrode **41** auf. Auslass **114,** Einlass **115** und Pumpe **31** sind so über eine Leitung miteinander verbunden, dass die flüssige Phase darüber im Kreislauf aus dem Reaktionsbehälter **11** heraus und wieder in den Reaktionsbehälter **11** hinein gefördert werden kann.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** und Auslass **113** für die Hämatit-Pigmentsuspension und gegebenenfalls eine pH-Elektrode **41** auf.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, eine Rühreinrichtung **2** umfassend einen Antrieb **21,** eine Verbindung zwischen Antrieb und Rührorgan **22,** ein Rührorgan **23** und gegebenenfalls eine pH-Elektrode **41** auf.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115,** eine Pumpe **31** und gegebenenfalls eine pH-Elektrode **41** auf.

Das bevorzugte Herstellungsverfahren wird im Folgenden detaillierter beschrieben.

Die Figuren beschreiben:

Figur 1: pH-Profil einer Umsetzung des bevorzugten Verfahrens. Die Zeit (h) ist auf der x-Achse, der pH-Wert der Reaktionsmischung auf der y-Achse aufgetragen.

Figur 2: pH-Profil eines Nitrat-Verfahrens nach dem Stand der Technik. Die Zeit (h) ist auf der x-Achse, der pH-Wert der Reaktionsmischung auf der y-Achse aufgetragen.

Figur 3: Reaktor **1** zur Durchführung des bevorzugten Verfahrens

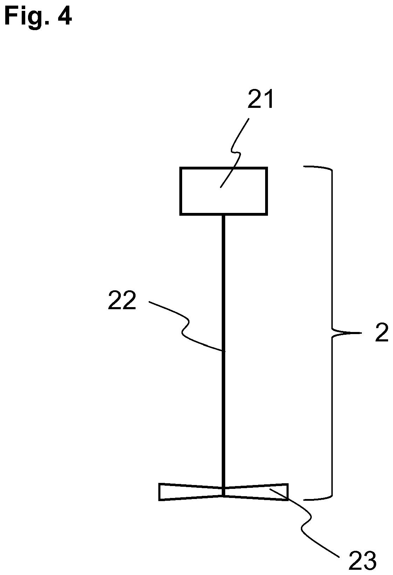

Figur 4:  Rühreinrichtung **2**

Es sei an dieser Stelle angemerkt, dass der Rahmen der Erfindung alle beliebigen und möglichen Kombinationen der oben stehenden und im Folgenden aufgeführten, allgemeinen Bereichen oder in Vorzugsbereichen genannten Komponenten, Wertebereiche bzw. Verfahrensparameter umfasst.

Die beim bevorzugten Verfahren eingesetzten wässrigen Hämatit-Keimsuspensionen und die darin enthaltenen Hämatit-Keime sind aus dem Stand der Technik bekannt. Hierzu wird auf die Beschreibung des Standes der Technik verwiesen. Die in der wasserhaltigen Hämatit-Keimsuspension enthaltenen Hämatit-Keime umfassen solche mit einer Teilchengröße von 100 nm oder weniger und einer spezifische BET-Oberfläche von 40 $m^2$/g bis 150 $m^2$/g, (gemessen nach DIN 66131). Das Kriterium der Teilchengröße dann als erfüllt, wenn zumindest 90% der Hämatit-Keime eine Teilchengröße von 100 nm oder weniger, besonders bevorzugt von 30 nm bis 90 nm, aufweisen. Die im bevorzugten Verfahren eingesetzten wässrigen Hämatit-Keimsuspensionen umfassen typischerweise Hämatit-Keime mit einer runden, ovalen oder hexagonalen Teilchenform. Der feinteilige Hämatit weist typischerweise eine hohe Reinheit auf.

Als Fremdmetalle sind in dem für die Herstellung der Hämatit-Keimsuspension eingesetzten Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können. Typischerweise weisen die in der wasserhaltigen Hämatit-Keimsuspension enthaltenen Hämatit-Keime einen Mangangehalt von 0,1 bis 0,7 Gew.%, bevorzugt 0,4 bis 0,6 Gew.%, auf. Mit Keimen dieser Qualität lassen sich farbstarke rote Eisenoxidpigmente herstellen.

Die im bevorzugten Verfahren eingesetzten Eisen(II)nitratlösungen sind aus dem Stand der Technik bekannt. Hierzu wird auf die Beschreibung des Standes der Technik verwiesen. Typischerweise weisen diese Eisen(II)nitratlösungen Konzentrationen von 50 bis 150 g/l $Fe(NO_3)_2$ (Angabe $Fe(NO_3)_2$ bezogen auf wasserfreie Substanz) auf. Neben $Fe(NO_3)_2$ können die Eisen(II)nitrat-Lösungen auch Mengen von 0 bis 50 g/l $Fe(NO_3)_3$ enthalten. Vorteilhaft sind jedoch möglichst niedrige Mengen an $Fe(NO_3)_3$.

Als Eisen wird beim dem bevorzugten Verfahren gewöhnlich Eisen in Form von Draht, Blechen, Nägeln, Granalien oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 10 mm Millimetern auf. Die Größe von Drahtbündeln oder von Blechen, die in das Verfahren eingesetzt werden, bemisst sich üblicherweise nach praktikablen Gesichtspunkten. So muss der Reaktor mit diesem Einsatzmaterial ohne Schwierigkeiten befüllt werden können, was in der Regel durch ein Mannloch erfolgt. Solches Eisen wird unter anderem als Schrott, oder als Nebenprodukt in der Metallverarbeitungs-Industrie, beispielsweise Stanzbleche, erzeugt.

Das im bevorzugten Verfahren eingesetzte Eisen weist in der Regel einen Eisengehalt von >90 Gew% auf. Als Verunreinigungen treten in diesem Eisen üblicherweise Fremdmetalle wie z.B. Mangan, Chrom, Silizium, Nickel, Kupfer, und andere Elemente auf. Es kann jedoch auch ohne Nachteile Eisen mit einem höheren Reinheitsgrad eingesetzt werden. Typischerweise wird Eisen in einer Menge zwischen 20 und 150 g/l bezogen auf das Volumen der Reaktionsmischung zu Beginn der bevorzugten Umsetzung eingesetzt. In einer weiteren bevorzugten Ausführungsform wird das Eisen, bevorzugt in Form von Stanzblechen oder Drähten, auf der Eisenvorlage über deren Fläche mit einer bevorzugten Schüttdichte von kleiner 2000 kg/$m^3$, besonders bevorzugt kleiner 1000 kg/$m^3$ verteilt. Die Schüttdichte kann beispielsweise durch Biegen von Blechen zumindest einer Eisenqualität und/oder durch gezieltes Legen des Eisens realisiert werden. Dies führt dazu, dass typischerweise mehr als 90 Volumenprozent des unter der Eisenvorlage eingeblasenen sauerstoffhaltigen Gases die Eisenvorlage passiert, ohne dass sich das sauerstoffhaltige Gas unter der Eisenvorlage aufstaut.

Die Eisenvorlage, beispielsweise Vorlage **12,** ermöglicht einen Austausch von Suspension und Gas durch in der Eisenvorlage vorhandene Öffnungen. Typische Ausführungsformen für die Eisenvorlage können Siebböden, Lochböden oder Gitter darstellen. In einer Ausführungsform beträgt das Verhältnis zwischen der kumulierten Fläche an Öffnungen und der gesamten Vorlagefläche von 0,1 bis 0,9, bevorzugt von 0,1 bis 0,3. Die für den Suspensionsaustausch erforderlichen Löcher oder Öffnungen werden typischerweise so gewählt, dass Durchfallen des Eisens durch die Eisenvorlage weitestgehend vermieden wird. Die Eisenvorlage, beispielsweise Vorlage **12,** kann vom Durchmesser dem Reaktorinnendurchmesser, beispielsweise dem Innendurchmesser des Reaktionsbehälters **11,** entsprechen, oder auch kleiner ausgelegt werden. Im letzteren Fall wird bevorzugt seitlich an der Eisenvorlageeinrichtung eine Wandung angebracht, die ein Herabfallen von Eisen vermeidet. Diese Wandung kann Suspensions-durchlässig, beispielsweise ausgeführt als Gitter, oder Suspensions-undurchlässig sein und beispielsweise die Form einer Röhre oder eines oben offenen Quader entsprechen.

Bevorzugt wird die Gesamtmenge an Eisen in einer Menge von 100 bis 140 Gew.%, bevorzugt von 100 bis 120 Gew.% der bei der Reaktion umgesetzten Eisenmenge für eine Durchführung des Verfahrens vorgelegt. Die bei der Reaktion umgesetzte Eisenmenge wird über Differenzwägung der Eisenmenge vor und nach der Reaktion ermittelt.

In einer Variante nach dem Stand der Technik eine gewisse Menge Eisen vorgelegt und dann weiteres Eisen während der gesamten Reaktionsdauer portionsweise zugeben, wobei insgesamt ein deutlicher Überschuss, typischerweise 150 bis 200 Gew.-% der bei der Reaktion umgesetzten Eisenmenge eingesetzt wird. Hierdurch kann der pH-Wert der Reaktionsmischung zwar angehoben werden, eine Verbesserung der Farbeigenschaften der resultierenden Pigmente kann aber nicht erreicht werden.

In einer bevorzugten Ausführungsform wird im Verfahren zur Herstellung der Hämatit-Keimsuspension und/oder der Eisen(II)nitratlösung und/oder der Hämatit-Pigmentsuspension als Wasser salzarmes Wasser eingesetzt. Als Maß der Salzfracht kann vereinfacht die Leitfähigkeit betrachtet werden. Salzarmes Wasser im Sinne der Erfindung weist eine Leitfähigkeit von 20 μS/cm oder weniger, bevorzugt von 10 μS/cm oder weniger, besonders bevorzugt von 5 μS/cm oder weniger, auf. Mehrwertige Anionen wie z.B. Phosphat, Silikat, Sulfat und Carbonat die in Betriebswasser häufig enthalten sind, können einen flockenden Effekt auf die Eisenoxidpigmente besitzen und führen dazu, dass das Eisenoxidpigment schon während der Reaktion ausflockt und sich am Reaktorboden als Sediment absetzt. Um diesen Effekt zu vermeiden, wird bevorzugt salzarmes Wasser, z.B. vollentsalztes Wasser (VE-Wasser), destilliertes Wasser oder Wasser aus Umkehrosmose, verwendet. Weiterhin werden dadurch die Farbwerte der Hämatit-Pigmente In einer besonders bevorzugten Ausführungsform wird im Verfahren zur Herstellung der Hämatit-Keimsuspension und der Eisen(II)nitratlösung und der Hämatit-Pigmentsuspension als Wasser salzarmes Wasser eingesetzt. Dadurch werden nochmals die Farbwerte der Pigmente verbessert.

Im bevorzugten Verfahren erfolgt die Umsetzung von zumindest Eisen, Hämatit-Keimsuspension und Eisen(II)nitratlösung in Gegenwart von zumindest einem sauerstoffhaltigen Gas bei Temperaturen von 70 bis 99°C.

Das zumindest eine sauerstoffhaltige Gas ist bevorzugt ausgewählt aus Luft, Sauerstoff, über Umgebungstemperatur erwärmte Luft oder mit Wasserdampf angereicherte Luft.

Gemäß des bevorzugten Verfahrens erfolgt die Umsetzung von zumindest Eisen, Hämatit-Keimsuspension und Eisen(II)nitratlösung derart, dass zumindest die während der Umsetzung vorhandene flüssige Phase mittels mechanischer und/oder hydraulischer Durchmischung durchmischt wird oder eben nicht. Da sich in der flüssigen Phase suspendierter Hämatit befindet, erfolgt gegebenenfalls die mechanische und/oder hydraulische Durchmischung bevorzugt derart, dass der in der flüssigen Phase suspendierte Hämatit in der flüssigen Phase gleichmäßig verteilt bleibt und sich nicht im unteren Teil der flüssigen Phase anreichert.

Unter mechanischer Durchmischung wird die Durchmischung der flüssigen Phase mittels geeigneten Vorrichtungen verstanden. Bevorzugt enthält die flüssige Phase auch darin suspendierten Feststoffe wie die Hämatit-Keime oder das Hämatit-Pigment sowie weitere Feststoffe wie z.B. Eisenpartikel. Bei der mechanischen Durchmischung umfassen die geeigneten Vorrichtungen Rühreinrichtungen, beispielsweise Axialrührer, Radialrührer und Tangentialrührer. Rühreinrichtungen, wie Rühreinrichtung **2** in Figur 1, weisen zumindest ein Rührorgan, wie Rührorgan **23** in Figur 1, beispielsweise Propeller, Wendel oder Blätter, auf, die eine Strömung der flüssigen Phase erzeugen. Rühreinrichtungen weisen außerdem typischerweise einen Antrieb, wie Antrieb **21** in Figur 1, z.B. einen Motor, und eine Verbindung zwischen Rührorgan und Antrieb **22,** z.B. eine Welle oder eine magnetische Kopplung auf. Je nach Rührertyp werden Strömungen in radialer Richtung, d.h. rechtwinklig zur Rührachse, oder in axialer Richtung, d.h. parallel zur Rührachse, oder Mischungen davon erzeugt. Beispielsweise erzeugen Blattrührer bevorzugt radiale Strömungen, Schrägblattrührer und Propellerrührer axiale Strömungen. Axiale Strömungen können nach oben oder nach unten gerichtet sein. Im Rahmen der vorliegenden Erfindung wird eine mechanischer Durchmischung der flüssigen Phase bevorzugt, die axial von unten nach oben auf das Eisen gerichtet ist. Dadurch wird gewährleistet, dass auch die flüssige Phase, die sich in den Hohlräumen der Eisenteile befindet, mit der flüssigen Phase, die sich außerhalb der Hohlräume der Eisenteile befindet, durchmischt wird. Bevorzugt befindet sich das zumindest eine Rührorgan unterhalb und/oder oberhalb des Eisens. Ebenfalls bevorzugt sind als Rührer Axialrührer, besonders bevorzugt Schrägblattrührer oder Propellerrührer.

In einer Ausführungsform sind bei radial wirkenden Rührorganen zusätzlich Strömungsstörer an der Innenseite der Wand des Reaktionsbehälters **1** vorhanden. Dadurch wird Mitrotieren der flüssigen Phase und die dadurch auftretende Bildung von Tromben vermieden.

Der Grad der mechanischen Durchmischung wird über die äußere Umfangsgeschwindigkeit des Rührorgans, beispielsweise des Rührorgans **23,** definiert. Bevorzugte Umfangsgeschwindigkeiten betragen 0,5 - 15 m/s, gemessen an dem Umfang des Kreises, der durch den Durchmesser des Rührorgans gebildet wird. Der Leistungseintrag in die flüssige Phase, der anhand der Leistungsaufnahme des Rührers abgeleitet werden kann, beträgt bevorzugt 0,1 bis 5 kW pro m$^3$-Ansatzvolumen, bevorzugt 0,4 bis 3 kW pro m$^3$-Ansatzvolumen. Das Verhältnis von Rührorgandurchmesser zu Reaktorinnendurchmesser beträgt bevorzugt 0,1 bis 0,9. Der Leistungseintrag in die flüssige Phase errechnet sich aus der Leistungsaufnahme des Rührers multipliziert mit dem Wirkungsgrad des Rührers in Prozent. Typische Wirkungsgrade von Rührern, die im bevorzugten Verfahren eingesetzt werden, liegen zwischen 70 und 90%. Im Rahmen der Erfindung werden Umfangsgeschwindigkeiten von 1 bis 15 m/s und ein Leistungseintrag von mindestens 0,4 kW/m$^3$ Ansatzvolumen besonders bevorzugt.

In einer weiteren Ausführungsform erfolgt eine hydraulische Durchmischung mit Hilfe einer Pumpe, beispielsweise Pumpe **31,** die die flüssige Phase aus dem Reaktor an einem Auslass, beispielsweise Auslass **114,** entnimmt und dem Reaktor wieder an anderer Stelle an einem Einlass, beispielsweise Einlass **115,** zuführt. An dem Ein- und Auslass sowie in dem gesamten Reaktionsgemisch werden hierbei Strömungen erzeugt. Eine hydraulische Durchmischung erfolgt mit Hilfe einer Pumpe, beispielsweise Pumpe **31,** die die flüssige Phase aus dem Reaktor an einem Auslass, beispielsweise Auslass **114,** entnimmt und dem Reaktor wieder an anderer Stelle an einem Einlass, beispielsweise Einlass **115,** zuführt. An dem Ein- und Auslass sowie in dem gesamten Reaktionsgemisch werden hierbei Strömungen erzeugt. Im Rahmen der Erfindung werden Umpumpmengen von 0,1 bis 20 Ansatzvolumina/Stunde bevorzugt. Beispielsweise beträgt die Umpumpmenge bei 30 $m^3$ Ansatzvolumen und einem Wert von 5 Ansatzvolumina / Stunde 150 $m^3$ /Stunde. In einer weiteren Ausführungsform werden Umpumpmengen bevorzugt, die eine Strömungsgeschwindigkeit am Einlass, beispielsweise Einlass **115,** von mindestens 0,05 m/s, bevorzugt von mindestens 0,06 bis 15 m /s, erzeugen. Hierbei wird die Strömungsgeschwindigkeiten am Eingang direkt am Übergang der Leitung, aus der die umgepumpten flüssige Phase in die Reaktionsmischung im Reaktorinnenraum strömt, gemessen. In einer weiteren Ausführungsform ist die Strömung aus dem Einlass, beispielsweise Einlass **115,** auf die Eisenvorlage, beispielsweise Eisenvorlage **12,** gerichtet, bevorzugt von unterhalb der Eisenvorlage auf die Eisenvorlage gerichtet mit einem Abstand von weniger als 2 m, bevorzugt weniger als 1 m. In einer weiteren Ausführungsform ist der Einlass, beispielsweise Einlass **115,** als Rohrleitung oder als Zweistoffstrahler oder als Düse ausgeführt.

In einer bevorzugten Ausführungsform des bevorzugten Verfahrens erfolgt die Umsetzung von zumindest Eisen, Hämatit-Keimsuspension und Eisen(II)nitratlösung derart, dass sie unter einer Begasung mit zumindest einem sauerstoffhaltigen Gas mit einer Begasungsvolumen von 6 $m^3$ Gasvolumen / $m^3$ Ansatzvolumen / Stunde oder weniger, bevorzugt von 0,2 bis 6 $m^3$ Gasvolumen / $m^3$ Ansatzvolumen / Stunde, besonders bevorzugt von 0,2 bis 5 $m^3$ Gasvolumen / $m^3$ Ansatzvolumen / Stunde, ganz besonders bevorzugt von 0,2 bis 3 $m^3$ Gasvolumen / $m^3$ Ansatzvolumen / Stunde erfolgt.

In einer weiteren Ausführungsform erfolgt die Begasung mit zumindest einem sauerstoffhaltigen Gas ohne mechanische und ohne hydraulische Durchmischung. Nur die Begasung mit sauerstoffhaltigem Gas führt hier zu einer starken Durchmischung der Reaktionsmischung, beispielsweise bei Begasungsvolumina von 7 bis 10 $m^3$ pro Stunde und $m^3$ Ansatzvolumen, wodurch in der Reaktionsmischung eine starke Konvektion und eine starke Blasenbildung, vergleichbar einem starken Sieden einer Flüssigkeit, an der Oberfläche der Reaktionsmischung erzeugt wird.

Die Reaktionsmischung umfasst bevorzugt alle Einsatzstoffe und die daraus entstehenden festen, flüssigen und gasförmigen Produkte. Während der Umsetzung entsteht auch ein stickoxidhaltiger Stoffstrom **NOX.** In einer bevorzugten Ausführungsform wird der stickoxidhaltiger Stoffstrom **NOX** aus dem Reaktor herausgeleitet, beispielsweise über den Auslass **112** von Reaktor **1.** Das Ansatzvolumen wird bevorzugt als das Gesamtvolumen der flüssigen und festen Bestandteile der Reaktionsmischung definiert, das sich zu einem jeweiligen Zeitpunkt der Umsetzung in dem Reaktionsbehälter, beispielsweise in Reaktor **1,** befindet. Das Ansatzvolumen kann beispielsweise zu jedem Zeitpunkt der Umsetzung über eine Füllstandsanzeige des Reaktors, in dem die Umsetzung durchgeführt wird, ermittelt werden.

Die Begasung mit zumindest einem sauerstoffhaltigen Gas erfolgt bevorzugt derart, dass das zumindest eine sauerstoffhaltige Gas unterhalb der Eisenvorlage, beispielsweise Vorlage **12,** in flüssige Phase der Reaktionsmischung eingebracht wird. Bevorzugt wird für die Einleitung des Gases eine Begasungseinheit, beispielsweise Begasungseinheit **13,** wie z.B. Begasungsring, Düsen, (Zwei)-Stoffstrahlern oder einer mit Löchern versehenen Rohrleitung, die sich innerhalb der Reaktionsmischung befindet, verwendet. Hierfür muss das zumindest eine sauerstoffhaltige Gas einen ausreichenden Druck aufweisen, um gegen den hydrostatischen Druck der Flüssigkeitssäule der Reaktionsmischung wirken zu können. Bevorzugt wird, beispielsweise über die Begasungseinheit **13** oder eine andere Vorrichtung, gasförmiger Stickstoff dann in die Reaktionsmischung eingeleitet, wenn der pH-Wert der Reaktionsmischung unter 2,2 fällt. Die Einleitung von gasförmigem Stickstoff in die Reaktionsmischung wird beendet, wenn sich der pH-Wert wieder in dem Bereich von pH 2,2 bis pH 4,0, bevorzugt von pH 2,2 bis pH 3,0, befindet. Der pH-Wert der Reaktionsmischung kann über regelmäßige Probennahme der Reaktionsmischung oder über eine sich innerhalb des Reaktionsbehälters befindliche pH-Wert-Mess-Sonde, beispielsweise pH-Sonde **41,** erfolgen. Die pH-Sonde **41** ist so angebracht, dass sie sich vollständig innerhalb der Reaktionsmischung befindet.

Während des bevorzugten Verfahrens wird auf den in der flüssigen Phase enthaltenen Hämatit-Keim das Pigment aufgebaut, wodurch eine Hämatit-Pigmentsuspension erzeugt wird, dessen Farbwerte, bevorzugt dessen a*- und b*-Werte in der Lackabtestung, sich während der Reaktion durch die beim Pigmentaufbau sich ändernden Teilchengröße und/oder -morphologie ändern. Durch Messen der Farbwerte des in der Hämatit-Pigmentsuspension enthaltenen Hämatit-Pigments wird der Zeitpunkt bestimmt, zu dem das bevorzugte Verfahren abgebrochen wird. Das bevorzugte Verfahren wird abgebrochen, wenn das Hämatit-Pigment in der Lackabtestung die geforderte Summe der a*- Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten aufweist. Eine ausführliche Beschreibung der durchgeführten Lackabtestung findet sich im Unterpunkt Beispiele und Methoden. Dies erfolgt durch Beendigung der Begasung, gegebenenfalls durch gleichzeitiges Abkühlen der Reaktionsmischung auf eine Temperatur von unter 70°C. Typische Reaktionszeiten für die bevorzugte Umsetzung liegen bei 10 bis 150 Stunden, abhängig vom gewünschten Farbton.

In einer bevorzugten Ausführungsform erfolgt nach der bevorzugten Umsetzung die Abtrennung des Hämatit-Pigments von der Hämatit-Suspension nach üblichen Methoden, bevorzugt durch Filtration und/oder Sedimentation und/oder Zentrifugation. Ebenfalls bevorzugt erfolgt Waschen nach der Abtrennung erhaltenen Filterkuchens und nachfolgende Trocknung des Filterkuchens. Ebenfalls bevorzugt werden vor der Abtrennung des Hämatit-Pigments von der Hämatit-Pigmentsuspension ein oder mehrere Siebungsschritte, besonders bevorzugt mit unter-schiedlichen Maschenweiten und mit absteigenden Maschenweiten, durchgeführt. Dies hat den Vorteil, dass dadurch Fremdkörper, beispielsweise Metallstücke, von der Hämatit-Pigment-suspension abgetrennt werden, die sonst das Hämatit-Pigment verunreinigen würden.

Für die Abtrennung des Hämatit-Pigments von der Hämatit-Pigmentsuspension können alle dem Fachmann bekannten Verfahren durchgeführt werden, z.B. Sedimentation mit anschließender Abtrennung der wässrigen Phase oder Filtration über Filterpressen, beispielsweise über Membranfilterpressen.

In einer bevorzugten Ausführungsform des bevorzugten Verfahrens kann zumindest ein Sulfatsalz, beispielsweise Eisen(II)sulfat und/oder ein Alkali- oder Erdalkalisulfat, bevorzugt Eisen(II)sulfat und/oder Natriumsulfat, zur Hämatit-Pigmentsuspension während oder vor der Siebung und/oder während oder vor der Abtrennung gegeben werden. Dies hat den Vorteil, dass die Sedimentation des Hämatit-Pigments aus der Hämatit-Pigmentsuspension beschleunigt wird. Dies erleichtert die nachfolgende Abtrennung des Hämatit-Pigments.

Gegebenenfalls erfolgt anschließend zumindest eine Wäsche des so abgetrennten Sedimentes oder Filterkuchens. Gegebenenfalls erfolgt nach der Abtrennung und/oder der Wäsche eine Trocknung des so abgetrennten Hämatit-Pigments-, beispielsweise mit Filtertrocknern, Bandtrocknern, Knettrocknern, Spinflash-Trocknern, Trockenschränken oder Sprühtrocknern. Bevorzugt erfolgt die Trocknung mit Bandtrocknern, Tellertrocknern, Knettrocknern und/oder Sprühtrocknern.

Überraschenderweise werden mit dem bevorzugten Verfahren Hämatit-Pigmente bereitgestellt, die sich für die erfindungsgemäße Verwendung zur Herstellung wässriger Titandioxid-haltiger, mahlstabiler Pigmentpräparationen besonders gut eignen.

## A) Titandioxid

Als bevorzugtes Titandioxid wird der Rutil-Typ eingesetzt, insbesondere ein solches mit einer mittleren Teilchengröße von 0,25 bis 0,35 $\mu$m, vorzugsweise von 0,30 bis 0,31$\mu$m. Bevorzugtes Titandioxid besitzt ebenfalls eine Öladsorption von 18 bis 24 g/100g gemessen nach DIN EN ISO 787-5: 1995. Auch bevorzugt besitzt das Titandioxid eine Oberflächenbeschichtung enthaltend Aluminiumoxid ($Al_2O_3$) und Siliciumoxid (SiO2).

Das Titanoxid wird vorzugsweise in einer Menge von 5 bis 20 Gew. %, insbesondere 8 bis 15 Gew.-%, bezogen auf die wässrige Präparation eingesetzt.

Bevorzugt ist weiterhin ein Gewichtsverhältnis von Hämatit Pigment zu TiO2 von 1:0,5 bis 1:20, insbesondere von 1:1 bis 1:10.

## C) Bindemittel

Bevorzugte sind Bindemittel Dispersionen von Kunststoffpolymeren oder Copolymeren, wobei als Monomere Acrylsäure, Acrylsäureester, Acrylsäureanhydrid, Acrylnitril, Methacrylsäure, Maleinsäure, Maleinsäureester, Maleinsäureanhydrid, Styrol, Olefine, Vinylchlorid oder Vinylacetat am häufigsten verwendet werden.

Die Dispergiermittel für anorganische Pigmente haben die Aufgabe, die Pigmente zu benetzen, zu dispergieren und die Pigmentpräparationen zu stabilisieren.

Nach dem Stand der Technik werden bevorzugt polymere Dispergiermittel und anionische, kationische und nichtionische Tenside eingesetzt, um die Pigmente in wässrigen Dispersionen zu dispergieren oder die Oberfläche zu modifizieren.

Als polymere Dispergiermittel werden üblicherweise niedrigmolekulare Polymerisate aus Acrylsäure oder Copolymere aus Acrylsäure, Methacrylsäure und Maleinsäure und deren Natrium, Kalium oder Ammoniumsalze eingesetzt.

Als anionische Tenside werden amphiphile Verbindungen eingesetzt, deren hydrophobe Gruppe ein aliphatischer oder aromatischer Rest darstellt und deren hydrophile Gruppe eine Carbon-, Sulfon- oder Phosphonsäuregruppe enthält oder einen Ester der Schwefelsäure oder Phosphorsäure darstellt.

Als bevorzugte nichtionische Tenside, die als Dispergiermittel für Pigmentpräparationen Verwendung finden, werden Fettalkoholethoxylate, Alkylphenolethoxylate und Copolymere aus Ethylenoxid, Proylenoxid und Styroloxid beschrieben.

Geeignete anionische Dispergiermittel sind vorzugsweise anionische Tenside aus der Gruppe der Natrium-, Kalium- und Ammoniumsalze von Fettsäuren, Alkylbenzolsulfonate, Alkylsulfonate, Olefinsulfonate, Polynaphthalinsulfonate, Alkylsulfate, Alkylpolyethylenglykolethersulfate, Alkyl-phenolpolyethylenglykolethersulfate, Sulfobernsteinsäureester, Alkylpolyethylenglykolether-phosphorsäureester, Alkylpolyethylenglycolethercarbonsäuren und deren Salze, Schwefel-säurehalbester und Phosphorsäureester von styrolsubstituierten Phenolethoxylaten, styrol-substituierte Phenolpolyethylenglycolethercarbonsäuren und ihre Salze, Natriumfettsäure-isethionate, Natriumfettsäuremethylthauride und Natriumfettsäuresarkoside.

Geeignete Feuchthaltemittel und Lösemittel sind vorzugsweise Glykolether, worunter hier insbesondere Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl-, Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmono-methylether, Tripropylenglykolmonomethylether, Ethylenglykol-monobutylether, Diethylenglykol-monobutylether, Butylpolyethylenglykolether, Propyl-polyethylenglykolether, Ethylpolyethylen-glykolether, Methylpolyethylenglykolether, Dimethyl-polyethylenglykolether, Dimethylpolypropylen-glykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol. Mittlere Molmasse/Molekulargewicht bedeutet zahlenmittlere Molmasse/Molekulargewicht.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen.

Besonders geeignet sind beispielsweise Formamid, Harnstoff, Tetramethylharnstoff, ε-Caprolactam, Glycerin, Diglycerin, Polyglycerin, N-Methylpyrrolidon, 1 ,3-Diethyl-2-imidazolidinon, Thiodiglykol, Natrium- Benzolsulfonat, Natrium-Xylolsulfonat, Natrium-Toluolsulfonat, Natrium- Cumolsulfonat, Natrium-Dodecylsulfonat, Natrium-Benzoat, Natrium-Salicylat, Natrium-Butylmonoglykolsulfat.

Geeignete Entschäumer sind vorzugsweise Mineralölentschäumer und deren Emulsionen, Siliconölentschäumer und Siliconölemulsionen, Polyaikylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure, Benthonitverdicker oder pyrogene Kieselsäure. Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, formaldehydabspaltende Komponenten, Methylisothiazolinon, Chlormethylisothiazolinon, Benzisothiazolinon, Bronopol und Dibromodicyanonbutan.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.

**Pigmentpräparation**

Die Erfindung betrifft auch eine Pigmentpräparation, enthalten:

50 bis 60% Hämatit Pigment und Titandioxid,
8 bis 25% Bindemittel,
0,2 bis 1% Dispergiermittel,
0,5 bis 1% Hilfsstoffe und

Rest Wasser.

In einer weiteren bevorzugten Ausführungsform weisen die Hämatit-Pigmente zusätzlich ein Newton'sches Fließverhalten auf, wenn sie in Form von Pasten, beispielsweise in Form von Pigment-Universalpasten vorliegen.

Das Newton'sches Fließverhalten wird definiert durch eine bestimmte Abhängigkeit der Viskosität der Paste von der Schergeschwindigkeit. Die Viskosität ist definiert als Maß für die Zähflüssigkeit eines Fluids, beispielsweise einer Pigmentpaste, und weist die Einheit Pa ▪ s auf. Je niedriger die Viskosität, desto dünnflüssiger ist das Fluid. Die Schergeschwindigkeit ist ein Begriff aus der Rheologie, d.h. der Lehre von Verform- und Fließverhalten von Material und ist definiert als Maß für die mechanische Belastung, der eine Probe bei einer rheologischen Messung unterworfen wird. Schergeschwindigkeit wird auch Schergefälle genannt. Die Schergeschwindigkeit besitzt die Einheit des Kehrwerts der Zeit, üblicherweise1/s. Bei Fluiden mit idealem Newton'schen Fließverhalten ist deren Viskosität unabhängig von der Schergeschwindigkeit, bei der die Viskosität gemessen wird. Die Viskosität für Pigmentpasten wird erfindungsgemäß mit einem Platten-Kegel-Viskosimeter (Rheo3000 der Fa. Brookfield Engineering Laboratories, Inc., USA) bei Schergeschwindigkeiten von 500/s bis 2000/s gemessen. Das Kriterium eines Newton'sches Fließverhaltens ist erfindungsgemäß dann erfüllt, wenn die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte von Schergeschwindigkeiten von 500/s, 1000/s, 1500/s und 2000/s abweicht. Ist eine Messung bei einer Schergeschwindigkeit, beispielsweise dann, wenn die Viskosität größer als die der maximal messbaren Viskosität ist, dann ist das Kriterium eines Newton'sches Fließverhaltens erfindungsgemäß ebenfalls nicht erfüllt. Die Messung der Viskosität bei unterschiedlichen Schergeschwindigkeiten wird erfindungsgemäß bei 20°C durchgeführt. Die zur Messung eingesetzte Pigmentpaste ist eine übliche Universalpaste mit folgender Zusammensetzung in Gew.%:

| PEG 200 | 10,0 |
|---|---|
| Wasser | 14,7 |
| Byk 044 | 2,0 |
| Disperbyk 102 | 2,0 |
| Bentone SD 2 | 1,0 |
| Disperbyk 185 | 8,8 |
| Pigment | 61,5 |

Die dabei eingesetzten Komponenten sind:

PEG 200: Polyethylenglycol 200, Merck KGaA, Deutschland
Byk 044: Silikonhaltiger Entschäumer für wässrige Druckfarben und Überdrucklacke. der Firma BYK Chemie GmbH, Deutschland
Disperbyk 102 Lösemittelfreies Netz- und Dispergieradditiv der Firma BYK Chemie GmbH, Deutschland
Bentone SD 2Rheologisches Additiv der Firma Elementis Specialities, USA
Disperbyk 185Lösemittelfreies Netz- und Dispergieradditiv der Firma BYK Chemie GmbH, Deutschland
Die Paste wird hergestellt, indem alle Komponenten 30 Minuten in einem Dissolver bei 4500 rpm miteinander vermischt werden.

Dieser Test wird Pastenviskositätstest genannt.

In dieser Ausführungsform weisen die erfindungsgemäß eingesetzen Eisenoxid-Rot-Pigmente eine Summe der a*-Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten beträgt, und im Pastenviskositätstest ein Newton'sches Fließverhalten auf, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht.

In einer weiteren Ausführungsform weisen die erfindungsgemäß eingesetzten Eisenoxid-Rot-Pigmente eine Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0, und im Pastenviskositätstest ein Newton'sches Fließverhalten, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht, auf.

In einer besonders bevorzugten Ausführungsform weisen die erfindungsgemäß verwendeten Pigmente eine Summe der a*- Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten beträgt, und im Pastenviskositätstest Viskositäten bei Schergeschwindigkeiten von 500/s, 1000/s, 1500/s und 2000/s von 0,300 bis 0,400 Pa ▪ s auf.

In einer weiteren besonders bevorzugten Ausführungsform weisen die erfindungsgemäß eingesetzten Pigmente eine Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0, besonders bevorzugt mehr als 59,0 CIELAB Einheiten, und im Pastenviskositätstest Viskositäten bei Schergeschwindigkeiten von 500/s, 1000/s, 1500/s und 2000/s von 0,300 bis 0,400 Pa ▪ s auf.

Die erfindungsgemäß eingesetzten Hämatit-Pigmente weisen darüber hinaus in einer besonderen Ausführungsform in Form von Pigmentpasten ein Newton'sches Fließverhalten auf. Dadurch wird die Verarbeitbarkeit der Pigmente in der Pasten- und Lackherstellung vereinfacht. Darüber hinaus sind die erfindungsgemäß eingesetzten Hämatit-Pigmente mit einem einfacheren Verfahren herstellbar als beispielsweise die Copperas-Pigmente.

Die erfindungsgemäßen wässrigen Pigmentpräparation können hergestellt werden, dadurch dass man wenigstens

A) ein Hämatit-Pigment wie oben definiert,

B) ein Titandioxid und

Wasser und weitere Zusätze mischt.

Zur Herstellung der erfindungsgemäßen, wässrigen Pigmentpräparationen benutztes Wasser, wird vorzugsweise in Form von destilliertem oder entsalztem Wasser eingesetzt. Auch Trinkwasser (Leitungswasser) und/oder Wasser natürlichen Ursprungs kann eingesetzt werden.

Wasser ist in der erfindungsgemäßen wässrigen Pigmentpräparation vorzugsweise zu 10 bis 65 Gew.-%, enthalten.

Die erfindungsgemäßen wässrigen Pigmentpräparationen weisen vorzugsweise eine Viskosität von 10 bis 10.000 mPas, bevorzugt 50 bis 5.000 mPas und besonders bevorzugt 300 bis 3.000 mPas auf, gemessen mit einem Kegel-Platte- Viskosimeter bei einer Scherrate von 1/60 sec"1, z. B. einem Haake Viscometer 550 der Fa. Thermo Haake.

Gegenstand der vorliegenden Erfindung ist auch ein Verfahren zur Herstellung der erfindungsgemäßen Pigmentpräparationen, indem man die Komponente (A) in Form von Pulver oder Granulat in Gegenwart von Wasser sowie der übrigen Komponenten in an sich üblicher Weise dispergiert, anschließend gegebenenfalls weiteres Wasser zumischt und die erhaltende wässrige Pigmentdispersion mit Wasser auf die gewünschte Konzentration. Zur Dispergierung können Rührwerke, Dissolver (Sägezahnrührer), Rotor-Stator-Mühlen, Kugelmühlen, Rührwerks-kugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Mahlfeinheit und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Überraschenderweise erhält man nach der Mahlung Eisenoxidrotpigmente, die sich durch hohe Farbreinheit bei gleichzeitiger hoher Mahlstabilität von herkömmlichen, bekannten Eisenoxid-rotpigmenten unterscheiden.

## Beispiele und Methoden:

### Titration Eisen(II) und Eisen(III)bestimmung:

Der Gehalt an Eisen(II)nitrat kann indirekt über die Messung des Eisen(II)-Gehaltes über eine potentiometrischen Titration einer mit Salzsäure angesäuerten Probenlösung mit Cer(III)sulfat bestimmt werden.

### pH-Messung:

pH-Messungen wurden mit einem Messgerät der Firma Knick, Protos MS3400-160 unter Verwendung von Knick, MemoSens, SE533X/2-NMSN durchgeführt. Vor der Messung wurde eine Kalibrierung mit Pufferlösungen von pH 4,65 und pH 9,23 (gemäß DIN 19267) vorgenommen. Die pH-Messung erfolgte innerhalb des gerührten Reaktionskessels bei 85°C.

### Messung des Chloridgehalts:

Die Bestimmung des Chloridgehalts erfolgt durch Ionenchromatographie.

### Verwendete Eisenqualitäten:

Eisenstanzbleche mit einer Dicke von 0,8 mm wurden verwendet die einen Mangan-Gehalt von weniger gleich 2500 ppm Mangan, weniger gleich 150 mg Chrom, Weniger gleich 0,07 % Kohlenstoff, weniger gleich 500 ppm Aluminium, weniger gleich 400 ppm Titan und weniger gleich 250 ppm Kupfer enthalten haben.

### VE-Wasser (Vollentsalztes Wasser):

Das verwendete salzarme Wasser (VE-Wasser) weist eine Leitfähigkeit von 4 $\mu$S/cm auf. Über den Leitfähigkeitswert kann die Ionenkonzentration abgeleitet werden. Die Messung erfolgte über eine elektrochemische Widerstandsmessung mit einem Gerät der Firma WTW. Alternativ zum vollentsalztem Wasser kann z.B. auch destilliertes Wasser oder aufgereinigtes Wasser aus einer Umkehrosmoseanlage verwendet werden, solange die Leitfähigkeit der oben genannten Spezifikation entspricht.

**Farbabtestung:**

Prüfung der Farbwerte in Purton und Aufhellung sowie der Farbstärke in der Aufhellung in einem thixotropierten langöligen Alkydharz (in Anlehnung an DIN EN ISO 11664-4:2011-07 und DIN EN ISO 787-25:2007). Zur Prüfung der Farbwerte von anorganischen Buntpigmenten wird das Pigment in einer Bindemittelpaste auf Basis eines nichttrocknenden langöligen Alkydharz dispergiert Die pigmentierte Paste wird in einen Pastenteller eingestrichen und anschließend im Vergleich zum Bezugspigment farbmetrisch ausgewertet.

1. Arbeitsgeräte

- Tellerfarbenausreibmaschine (TFAM), Plattendurchmesser 240mm*
- Präzisionswaage: Empfindlichkeit 0,001 g (Purton) Empfindlichkeit 0,0001g (Aufhellung)
- Spektralfarbmessgerät mit der Messgeometrie d/8°
- Palettmesser mit elastischer, hochglanzpolierter Klinge (Klingenlänge ca.100mm, Breite ca.20mm)
- Pastenteller und Rakel in Anlehnung an DIN EN ISO 787-25:2007

2. Hilfsmittel

2.1 Purton

Die Prüfpaste klar (thixotropiertes langöliges Alkydharz hergestellt in Anlehnung an DIN EN ISO 787-25:2007) enthält 95 Gew.% Alkydharz (WorléeKyd P151 der Firma Worlée-Chemie GmbH, Deutschland) und als Thixotropierungsmittel 5 Gew.% Luvotix HAT (Lehmann & Voss & Co. KG, Deutschland). Dabei wird das Luvotix in das auf 70 bis 75 °C vorgewärmten Alkydharz eingerührt und anschließend bei 95°C so lange gerührt, bis sich das gesamte Thixotropierungsmittel gelöst hat. Die abgekühlte Paste wird schließlich auf einem Dreiwalzwerk Bläschen-frei gewalzt.

2.2 Aufhellung

- Prüfpaste weiß (60 Gew.Prüfpaste klar + 40 Gew.% Titandioxid (R-KB-2 der Firma Sachtleben Pigment GmbH, Deutschland)

- Testbenzin und Putzlappen zum Reinigen der Geräte (gültig für 2.1 und 2.2)

3. Durchführung

3.1 Prüfung der Farbwerte im Purton

5,00 g der Prüfpaste klar werden auf den unteren Teil der Tellerfarbenausreibmaschine (TFAM) aufgebracht. 2,6 g des zu testenden Pigments wird mit der 'Prüfpaste klar' auf der unteren Platte der Farbenausreib-maschine außerhalb des Mittelpunkts mit dem Palettmesser ohne Druck vorgemischt bis es vollständig benetzt ist. Anschließend wird diese Mischung mit 3 x 25 Umdrehungen dispergiert. Nach jeweils 25 Umdrehungen wird das Mahlgut von der oberen Platte mit dem Palettmesser abgenommen und mit dem Mahlgut auf der unteren Platte nochmals gemischt und außerhalb des Mittelpunktes verteilt. Die Farbenausreibmaschine wird während der gesamten Dispergierung am vorderen Bügel mit 2,5kg Zusatzgewicht belastet. Die fertig präparierte Paste wird mit dem Palettmesser durchmischt und bis zur Messung auf einem Pastenteller überführt. Zur Messung wird mittels eines Pastenrakels die überschüssige Paste auf dem Pastenteller mit leichtem Druck abgezogen. Nach einer Ruhezeit von 1 Minute erfolgt die Messung der Farbwerte unmittelbar.

3.2 Prüfung der Farbwerte in der Aufhellung

5,00 g der 'Prüfpaste weiß' werden auf den unteren Teil der Farbenausreibmaschine (TFAM) aufgebracht. 0,400 g des zu prüfenden Pigmentes werden eingewogen, womit ein Massenverhältnis Pigment zu Titandioxd von 1:5 erreicht wird.

Das jeweilige Pigment wird mit dem Bindemittel auf der unteren Platte der Farbenausreibausreibmaschine außerhalb des Mittelpunkts mit dem Palettmesser ohne Druck vorgemischt bis es vollständig benetzt ist. Anschließend wird diese Mischung mit 5 x 25 Umdrehungen dispergiert. Nach jeweils 25 Umdrehungen wird das Mahlgut bei laufendem Motor von der oberen Platte mit dem Palettmesser abgenommen und mit dem Mahlgut auf der unteren Platte nochmals gemischt und außerhalb des Mittelpunktes verteilt. Die Farbenausreibmaschine wird während der gesamten Dispergierung am vorderen Bügel mit 2,5 kg Zusatzgewicht belastet. Die fertig präparierte Paste wird mit dem Palettmesser durchmischt und bis zur Messung auf einem Pastenteller überführt.

Zur Messung wird mittels eines Pastenrakels die überschüssige Paste auf dem Pastenteller mit leichtem Druck abgezogen. Nach einer Ruhezeit von 1 Minute erfolgt die Messung der Farbwerte unmittelbar.

Andere Dispergieraggregate, wie z. B. Mikrodismembrator S (Fa. Sartorius) oder 2-Planetenzentrifuge (Dual Axis Centrifugal oder Vortex-Mischer), können verwendet werden, wenn durch Korrelationsprüfungen sichergestellt wird, dass mit den verwendeten Einstellungen und Verfahren eine gleichwertige Dispergierung erfolgt.

4. Auswertung

Die farbmetrische Auswertung richtet sich nach folgenden Normen:

DIN EN ISO 11664-4 (2011-07). Farbmetrische Bestimmung von Farbmaßzahlen und Farbabständen im angenähert gleichförmigen CIELAB-Farbenraum

DIN 5033 Teil 7 Farbmessung, Messbedingungen für Körperfarben; Lichtart C wie unter Punkt 2.1.1 definiert; Messgeometrie d/8° wie unter Punkt 3.2.3 definiert

EN ISO 787-25 : 2007 Allgemeines Prüfverfahren für Pigmente und Füllstoffe-Teil 25: Vergleich der Farbe von Weiß-, Schwarz- und Buntpigmenten in Purtonsystemen; farbmetrisches Verfahren (ISO 787-25:2007).

## Herstellung der Hämatit-Keimsuspension

### Keimherstellung

37 kg Eisenblech mit einer Dicke von etwa 1 mm wurden in einem 1 $m^3$-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wurden 423 kg VE-Wasser vorgelegt und mit 120 upm (3,2 m/s, Schrägblattrührer, 50 cm Durchmesser, der Leistungseintrag betrug 0,6 kW/$m^3$ Ansatzvolumen) gerührt. Die Eisenvorlage war vollständig vom Wasser bedeckt. Das Gemisch wurde auf 90°C aufgeheizt und anschließend wurden 97 kg einer 25 gew.%igen Salpetersäure innerhalb von 60 Minuten zudosiert. Die Reaktion wurde bis zu einem Erreichen eines pH-Wertes von <2,0 durchgeführt. Hierfür wurden 8 Stunden benötigt. Die erhaltene Hämatit-Keimsuspension wurde anschließend auf Umgebungstemperatur abgekühlt und in einen Container abgefüllt. Die benötigte Menge an Hämatit-Keimkonzentration wurde anschließend nach vollständigem Aufrühren des Keimes im Container entnommen und für einen Penniman Aufbau eingesetzt. Die Hämatit-Keimkonzentration (als $Fe_2O_3$) betrug 130 g/l.

### Herstellung der Eisen(II)nitrat-Lösung

62 kg Eisenblech mit einer Dicke von etwa 1 mm wurden in einem 1 $m^3$-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wurden 423 kg VE-Wasser vorgelegt und mit 120 upm (3,2 m/s, Schrägblattrührer, 50 cm Durchmesser, der Leistungseintrag betrug 0,6 kW/$m^3$ Ansatzvolumen) gerührt. 277 kg einer 25 gew.%igen Salpetersäure wurden innerhalb von 200 Minuten zudosiert. Die Reaktion wurde bis zu einem Erreichen eines pH-Wertes von 5,0 durchgeführt. Hierfür wurden 15 Stunden benötigt. Die erhaltene Eisen(II)nitratlösung wurde anschließend auf Umgebungstemperatur abgekühlt und in einen Container abgefüllt. Nach 24 h Sedimentationszeit wurde die obere Phase (Klarphase) vom gelb/braunen Sediment abgetrennt und anschließend in einem Penniman Aufbau eingesetzt. Die Eisen(II)nitrat-Konzentration betrug 120 g/l.

**Beispiel 1**

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wird VE-Wasser und Eisen(II)nitrat in den Mengen zugeben, so dass ein Volumen von 510 Liter erreicht wurde und die Konzentration an Eisen(II)nitrat (gerechnet als wasserfreies Eisennitrat) 62 g/l betrug. Das Gemisch wurde während der gesamten Reaktionszeit mit einem Rührer durchmischt (80 upm, 2,1 m/s, Schrägblattrührer, 50 cm Durchmesser, der Leistungseintrag betrug 0,31 kW/m³ Ansatzvolumen). 1 Stunde nach Zugabe der Eisen(II)nitrat Lösung wurden 161 Liter Hämatit-Keimsuspension mit einer Konzentration von 130 g/l (bezogen auf Fe2O3) zugeben und das Gemisch auf 85°C aufgeheizt. Nach 1 Stunde bei 85°C wurde die Begasung mit 800 l/h Luft begonnen. Zusätzlich wurde bei Bedarf 2 m³/h Stickstoff über einen Begasungsring eingeleitet, um den Reaktions-pH-Wert im Bereich von 2,2-2,4 zu halten (Einschaltung der Stickstoffbegasung bei pH-Werten von 2,2 und wieder Abschalten bei pH 2,4).

Während der Reaktion wurden in Abständen von 4 h jeweils 1 Liter Suspensionsproben entnommen, die über eine Filternutsche abfiltriert und mit VE-Wasser gewaschen wurden. Der Waschvorgang wurde solange fortgeführt, bis das Filtrat eine Leitfähigkeit von <1000 μS/cm aufwies. Der Filterkuchen wurde anschließend bei 80°C bis zu einer Restfeuchte kleiner 5 Gew.% getrocknet und die Farbe im Lacksystem (für eine genaue Beschreibung der Farbabtestung siehe Methoden) bestimmt. Nach Erreichen des gewünschten Farbraumes wurde die Reaktionsmischung mit Eisen(II)sulfat versetzt (29 Liter mit 206 g/l FeSO4) und anschließend über eine Filterpresse filtriert und das erhaltene Hämatit-Pigment mit VE-Wasser bis zu einer Leitfähigkeit des Filtrates von <1000 μS/cm gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert. Das Hämatit-Pigment wurde so in Pulverform in einer Ausbeute von 81,0 kg erhalten. Die Reaktionszeit betrug insgesamt 185 h. Die Farbabtestung erfolgte gemäß der voran beschriebenen Methodenbeschreibung. Der Chlorid-Gehalt im getrockneten Pigment wurde mit 0,006 Gew.% bestimmt. Die Viskositäten in dem Pastenviskositätstest betrugen: 0,358 Pa · s (bei 500/s), 0,341 Pa-s (bei 1000/s), 0,337 Pa-s (bei 1500/s) und 0,344 Pa-s (bei 2000/s).

**Beispiel 2 (Vergleichsbeispiel)**

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wird auf dem Siebboden gleichmäßig verteilt. Anschließend wird VE-Wasser und Eisen(II)nitrat in den Mengen zugeben, so dass ein Volumen von 510 Liter erreicht wurde und die Konzentration an Eisen(II)nitrat (gerechnet als wasserfreies Eisennitrat) 62 g/l betrug. Das Gemisch wurde während der gesamten Reaktionszeit mit einem Rührer durchmischt (80 upm, 2,1 m/s, Schrägblattrührer, 50 cm Durchmesser, der Leistungseintrag betrug 0,31 kW/m³ Ansatzvolumen). 1 Stunde nach Zugabe der Eisen(II)nitrat Lösung wurden 161 Liter Hämatit-Keimsuspension mit einer Konzentration von 130 g/l (bezogen auf Fe2O3) zugeben und das Gemisch auf 85°C aufgeheizt. Nach 1 Stunde bei 85°C wurde die Begasung mit 800 l/h Luft begonnen. Der Reaktions pH-Wert ist in Fig 1 dargestellt. Während der Reaktion wurden in Abständen von 4 h jeweils 1 Liter Suspensionsproben entnommen, die über eine Filternutsche abfiltriert und mit VE-Wasser gewaschen wurden. Der Waschvorgang wurde solange fortgeführt, bis das Filtrat eine Leitfähigkeit von <1000 μS/cm aufwies. Der Filterkuchen wurde anschließend bei 80°C bis zu einer Restfeuchte kleiner 5 Gew.% getrocknet und die Farbe im Lacksystem (für eine genaue Beschreibung der Farbabtestung siehe Methoden) bestimmt. Nach Erreichen des gewünschten Farbraumes wurde die Reaktionsmischung mit Eisen(II)sulfat versetzt (29 Liter mit 206 g/l FeSO4) und anschließend über eine Filterpresse filtriert und das erhaltene Hämatit-Pigment mit VE-Wasser bis zu einer Leitfähigkeit des Filtrates von <1000 μS/cm gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert. Das Hämatit-Pigment wurde so in Pulverform in einer Ausbeute von 76,0 kg erhalten. Die Reaktionszeit betrug insgesamt 96 h. In der Lackabtestung wurde ein a*-Wert im Purton von 29,5 CIELAB-Einheiten und in der Aufhellung ein a* von 25,1 CIELAB-Einheiten gemessen. Die Summe der a*-Werte beträgt dementsprechend 54,6 CIELAB-Einheiten. Die Lackabtestung erfolgte gemäß der voran beschriebenen Methodenbeschreibung.

Tabelle 2: Farbwerte der Beispiele in der Lackabtestung

| Beispiel | a* Purton | b* Purton | C* Purton | a* Aufhellung | b* Aufhellung | C* Aufhellung | Summe a* Purton + a* Aufhellung |
|---|---|---|---|---|---|---|---|
| 1 | 31,0 | 25,0 | 39,8 | 28,7 | 20,8 | 35,4 | 59,7 |
| 2 (zum Vergleich) | 29,5 | 22,2 | 36,9 | 25,1 | 15,2 | 9,3 | 54,6 |

Tabelle 3: Vergleichswerte bezogen auf den internen Referenzstandard eines Pigments des Typs R1599D

| Beispiel | $\Delta$a* Purton | $\Delta$b* Purton | $\Delta$C* Purton | $\Delta$a* Aufhellung | $\Delta$b* Aufhellung | $\Delta$C* Aufhellung | Summe $\Delta$a* Purton+ $\Delta$a* Aufhellung |
|---|---|---|---|---|---|---|---|
| 1 | 0,5 | 0,2 | 0,5 | 1,5 | 2,0 | 2,3 | 2,0 |
| 2 (zum Vergleich) | -1,0 | -2,6 | -2,4 | -2,1 | -3,6 | -3,8 | -3,1 |

In einer bevorzugten Ausführungsform weisen die erfindungsgemäß verwendeten Eisenoxid-Rot-Pigmente zusätzlich eine erhöhte Mahlstabilität auf, wenn sie in Form von wässrigen Pigmentkonzentraten bei anschließender Auflackung mit einer wässrigen Acrylatdispersion hergestellt werden.

**Beispiele:**

**Beschreibung der verwendeten Messmethode**

Die Prüfungen der Mahlstabilitäten wurden beispielhaft in einem 3 stufigem System bestehend aus einem Pigmentkonzentrat enthaltend das Pigment aus Beispiel 1, einem Auflackbindemittel sowie einem Weißlack zur Aufhellung durchgeführt.
Zur farbmesstrischen Auswertung wurden zunächst die Pigmentkonzentrate mit unterschiedlich starker Dispergierung hergestellt. Einerseits mittels eines High Speed Dissolvers Dispermat FM 10 SIP der Firma Getzmann für 10 Minuten, andererseits mit dem Farbenmischer RM 500 der Fa. Olbrich know how, D-58675 Hemer mit Glasperlen mit 3mm Durchmesser für 30 Minuten. Die Pigmentkonzentrate wurde anschließend in einem wässrigen Acrylatbindemittel aufgelackt. Zur Untersuchung der Aufhellung wurde anschließend die so hergestellten Pigmentkonzentrate mit Auflackbindemittel mit einem Weißkonzentrate gemischt und 24h gelagert. Danach wurde der Aufhellungslack auf Weisskarton mit einer Schichtdicke von 200$\mu$m appliziert. Nach 24h erfolgte die Farbmessung mit einem Datacolor SF 600 Spektralfarbmessgerät. Die Farbabstände wurden in Anlehnung an DIN EN ISO 11664-4 (2011-07) und DIN 5033 Teil 7 bestimmt.
Die Mahlstabilität wird bestimmt aus dem ermittelten Gesamtfarbabstand dEab* des hergestellten Aufhellungslackes nach 10 Minuten High Speed Dissolverdispergierung Dispermat FM 10 SIP als Referenz und des Aufhellungslackes mit dem Farbenmischer RM 500 nach 30 Minuten als Probe.

**Herstellung der Pigmentkonzentrate**

Das wässrige Pigmentkonzentrat enthaltend das Pigment aus Beispiel 1 wurde mit einer Pigmentkonzentration von 67% hergestellt. Zur Dispergierung wurde die Pigmentpräparation in einem der Größe des Ansatzes entsprechenden geeigneten Behälter vorgegeben und in der dem Fachmann bekannten Weise homogenisiert. Nach Pigmentzugabe wird durch Zugabe von Natronlauge, 10%ig, der pH Wert auf 8,5 +/- 0,2 in der dem Fachmann bekannten Weise eingestellt.
Das zur Messung eingesetzte Pigmentkonzentrat besitzt folgende Zusammensetzung in Gew.%:

| | |
|---|---|
| Destilliertes Wasser | 25,4 |
| Dispex Ultra PX 4575 | 6,7 |
| Lucrafoam DNE 01 | 0,5 |

(fortgesetzt)

| | |
|---|---|
| Deuteron VT 819 | 0,2 |
| Preventol D7 | 0,2 |
| Pigment aus Beispiel 1 | 67,0 |

Die dabei eingesetzten Komponenten sind:

Dispex Ultra PX 4575: Acrylat basiertes Block Copolymer der Firma BASF SE Formulation Additives, Deutschland

Lucrafoam DNE 01: Mineralölentschäumer der Firma LEVACO Chemicals GmbH, Deutschland

Deuteron VT 819: Anionisches Heteropolysaccharid (Xanthan Gum) der Firma Deuteron GmbH, Deutschland

Preventol D7: Formulierung mit Isothiazolinonen, LANXESS Deutschland GmbH

**Auflackbindemittel**

Als Auflackbindemittel wurde die wässrige Acrylatdispersion der Firma Alberdingk Boley GmbH, Deutschland, Alberdingk® AC 2025, verwendet.

**Herstellung der Weisspaste zur Aufhellung**

Die Titandioxid Weißpaste zur Aufhellung wurde mit einer Pigmentkonzentration von 70% hergestellt. Zur Dispergierung wurde die Pigmentpräparation in einem der Größe des Ansatzes entsprechenden geeigneten Behälter vorgegeben und in der dem Fachmann bekannten Weise homogenisiert. Nach Pigmentzugabe wird durch Zugabe von Natronlauge, 10%ig, der pH Wert auf 8,5 +/- 0,2 in der dem Fachmann bekannten Weise eingestellt und 15 Minuten am High Speed Dissolver Dispermat FM 10 SIP der Firma Getzmann bei 3000 rpm dispergiert.

Die zur Messung eingesetzte Weißpaste besitzt folgende Zusammensetzung in Gew.%:

| | |
|---|---|
| Destilliertes Wasser | 22,4 |
| Dispex Ultra PX 4575 | 5,3 |
| Lucrafoam DNE 01 | 0,5 |
| Deuteron VT 819 | 0,1 |
| Preventol D7 | 0,2 |
| Sachtleben R-KB-2 | 70,0 |

Die dabei eingesetzten Komponenten sind:

Dispex Ultra PX 4575: Acrylat basiertes Block Copolymer der Firma BASF SE Formulation Additives, Deutschland

Lucrafoam DNE 01: Mineralölentschäumer der Firma LEVACO Chemicals GmbH, Deutschland

Deuteron VT 819: Anionisches Heteropolysaccharid (Xanthan Gum) der Firma Deuteron GmbH, Deutschland

Preventol D7: Formulierung mit Isothiazolinonen, LANXESS Deutschland GmbH

Sachtleben R-KB-2: Mikronisiertes Titandioxid (Rutil) der Firma Sachtleben Pigment GmbH, Deutschland

Die so hergestellten Pigmentkonzentrate, das Auflackbindemittel und die Weißpaste zur Aufhellung wurden in folgenden Verhältnissen gemischt und für 20 Minuten im Farbmischgerät FAS 500 der Firma Lau, homogenisiert.
Pigment aus Beispiel 1:Sachtleben R-KB-2 Verhältnis 1:1
2,55 g Pigmentkonzentrat + 15g Auflackbindemittel + 2,44 g Weißpaste
Pigment aus Beispiel 1:Sachtleben R-KB-2 Verhältnis 1:5
0,86 g Pigmentkonzentrat + 15g Auflackbindemittel + 4,14 g Weißpaste
Pigment aus Beispiel 1:Sachtleben R-KB-2 Verhältnis 1:10

0,47 g Pigmentkonzentrat + 15g Auflackbindemittel + 4,53 g Weißpaste

**Auswertung**

Die farbmetrische Auswertung richtet sich nach folgenden Normen:

DIN EN ISO 11664-4 (2011-07). Farbmetrische Bestimmung von Farbmaßzahlen und Farbabständen im angenähert gleichförmigen CIELAB-Farbenraum

DIN 5033 Teil 7 Farbmessung, Messbedingungen für Körperfarben; Lichtart C wie unter Punkt 2.1.1 definiert; Messgeometrie d/8° wie unter Punkt 3.2.3 definiert

EN ISO 787-25 : 2007 Allgemeines Prüfverfahren für Pigmente und Füllstoffe-Teil 25: Vergleich der Farbe von Weiß-, Schwarz- und Buntpigmenten in Purtonsystemen; farbmetrisches Verfahren (ISO 787-25:2007).

In der folgenden Tabelle 2 ist der Gesamtfarbabstand dEab* in der Lackabtestung in der Aufhellung mit unterschiedlichen Hämatit Pigment aus Beispiel 1 : Titandioxidverhältnissen dargestellt.

Tabelle 2: Gesamtfarbabstände in der Lackabtestung in der Aufhellung mit unterschiedlichen Titandioxidverhältnissen

| | Pigment aus Beispiel 1 : Sachtleben R-KB-2 | | |
|---|---|---|---|
| | 1:1 | 1:5 | 1:10 |
| | dEab* | | |
| Pigment aus Beispiel 1 | ≤0,3 | ≤0,6 | ≤0,6 |
| Laux Pigment | ≤0,5 | ≤0,7 | ≤1,7 |

Ausführungsform weisen die erfindungsgemäß eingesetzten Eisenoxid-Rot-Pigmente einen Gesamtfarbabstand dEab* im Verhältnis Pigment aus Beispiel 1 zu Sachtleben R-KB-2 1:1 von ≤0,3, im Verhältnis 1:5 von dEab* ≤0,6 und im Verhältnis 1:10 von dEab* ≤0,6 auf.

Bevorzugt ist ein Gesamtfarbabstand dEab* für ein Pigment TiO2 Verhältnis von 1:1 von kleiner als0.4.

**Patentansprüche**

1. Verwendung eines Hämatit-Pigments dessen Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 beträgt zur Herstellung einer wässrigen, Titandioxid-haltigen Präparation, enthaltend

50 bis 60% des Hämatit Pigments und Titandioxid,
8 bis 25% Bindemittel,
0,2 bis 1% Dispergiermittel,
0,5 bis 1% Hilfsstoffe und

Rest Wasser.

2. Verwendung gemäß Anspruch 1, wobei das Hämatit-Pigment die Modifikation $\alpha$-$Fe_2O_3$ umfasst.

3. Verwendung gemäß Anspruch 1 oder 2, wobei das Hämatit-Pigment eine Teilchengröße von 0,1 bis 0,3 $\mu$m aufweist.

4. Verwendung gemäß Anspruch 3, wobei zumindest 80 Gew. % des Hämatit-Pigments eine Teilchengröße von 0,1 bis 0,3 $\mu$m aufweisen.

5. Verwendung gemäß wenigstens einem der Ansprüche 1 bis 4, **dadurch gekennzeichnet, dass** das Hämatit-Pigment im Pastenviskositätstest ein Newton'sches Fließverhalten aufweisen, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht.

6. Verwendung gemäß wenigstens einem der Ansprüche 1 bis 5, **dadurch gekennzeichnet, dass** das Hämatit-Pigment erhältlich ist durch die Umsetzung von Eisen, Hämatit-Keimsuspension, enthaltend Hämatit-Keime, die eine Teilchengröße von 100 nm oder weniger und eine spezifische BET-Oberfläche von 40 m$^2$/g bis 150 m$^2$/g (gemessen nach DIN 66131) aufweisen, und Eisen(II)nitratlösung in Gegenwart von zumindest einem sauerstoffhaltigen Gas bei Temperaturen von 70 bis 99°C, **dadurch gekennzeichnet, dass** die Umsetzung während der Begasung mit einem sauerstoffhaltigem Gas in einem pH-Bereich von pH 2,2 bis pH 4,0, bevorzugt von pH 2,2 bis pH 3,0 stattfindet, wobei eine Hämatit-Pigmentsuspension erzeugt wird.

7. Verwendung gemäß wenigstens einem der Ansprüche 1 bis 6, **dadurch gekennzeichnet, dass** als Titandioxid als Rutil-Typ verwendet wird.

8. Pigmentpräparation enthaltend

　　50 bis 60% des Hämatit Pigments definiert in Anspruch 1und Titandioxid,
　　8 bis 25% Bindemittel,
　　0,2 bis 1% Dispergiermittel,
　　0,5 bis 1% Hilfsstoffe und

　　Rest Wasser

## Claims

1. Use of a haematite pigment whose sum of the a* values in full shade and with reduction in the surface coating test is from 58.0 to 61.0 CIELAB units, preferably from 58.0 to 60.0 CIELAB units, more preferably from 58.5 to 61.0 CIELAB units, more preferably from 58.5 to 60.0 CIELAB units, particularly preferably from 59.0 to 61.0 CIELAB units, more particularly preferably from 59.0 to 60.0 for producing an aqueous, titanium dioxide-containing preparation containing
   from 50 to 60% of the haematite pigment and titanium dioxide,
   from 8 to 25% of binders,
   from 0.2 to 1% of dispersants,
   from 0.5 to 1% of auxiliaries and
   water as balance.

2. Use according to Claim 1, wherein the haematite pigment comprises the modification $\alpha$-Fe$_2$O$_3$.

3. Use according to Claim 1 or 2, wherein the haematite pigment has a particle size of from 0.1 to 0.3 $\mu$m.

4. Use according to Claim 3, wherein at least 80% by weight of the haematite pigment has a particle size of from 0.1 to 0.3 $\mu$m.

5. Use according to at least one of Claims 1 to 4, **characterized in that** the haematite pigment has a Newtonian flow behaviour in the paste viscosity test, with the viscosity at each measured value at shear rates of 500/s, 1000/s, 1500/s and 2000/s differing by 10% or less, preferably by 5% or less, from the arithmetic mean of the measured values at the shear rates of 500/s, 1000/s, 1500/s and 2000/s.

6. Use according to at least one of Claims 1 to 5, **characterized in that** the haematite pigment is obtainable by reaction of iron, haematite nucleus suspension containing haematite nuclei having a particle size of 100 nm or less and a specific BET surface area of from 40 m$^2$/g to 150 m$^2$/g (measured in accordance with DIN 66131) and iron(II) nitrate solution in the presence of at least one oxygen-containing gas at temperatures of from 70 to 99°C, **characterized in that** the reaction during introduction of an oxygen-containing gas takes place in a pH range from pH 2.2 to pH 4.0, preferably from pH 2.2 to pH 3.0, producing a haematite pigment suspension.

7. Use according to at least one of Claims 1 to 6, **characterized in that** titanium dioxide is used as rutile type.

**8.** Pigment preparation containing
from 50 to 60% of the haematite pigment defined in Claim 1, and titanium dioxide,
from 8 to 25% of binders,
from 0.2 to 1% of dispersants,
from 0.5 to 1% of auxiliaries, and
water as balance.

**Revendications**

**1.** Utilisation d'un pigment hématite dont la somme des valeurs a* dans la couleur en masse et dans l'éclaircissement lors de l'évaluation du vernis est de 58,0 à 61,0 unités CIELAB, de préférence de 58,0 à 60,0 unités CIELAB, de manière davantage préférée de 58,5 à 61,0 unités CIELAB, de manière davantage préférée de 58,5 à 60,0 unités CIELAB, de manière particulièrement préférée de 59,0 à 61,0 unités CIELAB, de manière encore davantage préférée de 59,0 à 60,0, pour la fabrication d'une préparation aqueuse contenant du dioxyde de titane, contenant :

50 à 60 % du pigment hématite et de dioxyde de titane,
8 à 25 % de liant,
0,2 à 1 % de dispersant,
0,5 à 1 % d'adjuvants,

le reste étant de l'eau.

**2.** Utilisation selon la revendication 1, dans laquelle le pigment hématite comprend la forme $\alpha$-Fe$_2$O$_3$.

**3.** Utilisation selon la revendication 1 ou 2, dans laquelle le pigment hématite présente une taille de particule de 0,1 à 0,3 $\mu$m.

**4.** Utilisation selon la revendication 3, dans laquelle au moins 80 % en poids du pigment hématite présente une taille de particule de 0,1 à 0,3 $\mu$m.

**5.** Utilisation selon au moins l'une quelconque des revendications 1 à 4, **caractérisée en ce que** le pigment hématite présente lors du test de viscosité en pâte un comportement d'écoulement newtonien, la viscosité lors de chaque valeur de mesure à des vitesses de cisaillement de 500/s, 1 000/s, 1 500/s et 2 000/s déviant de 10 % ou moins, de préférence de 5 % ou moins, de la valeur moyenne arithmétique des valeurs de mesure des vitesses de cisaillement de 500/s, 1 000/s, 1 500/s et 2 000/s.

**6.** Utilisation selon au moins l'une quelconque des revendications 1 à 5, **caractérisée en ce que** le pigment hématite peut être obtenu par la mise en réaction de fer, d'une suspension de germes d'hématite, contenant des germes d'hématite, qui présentent une taille de particule de 100 nm ou moins et une surface BET spécifique de 40 m$^2$/g à 150 m$^2$/g (mesurée selon DIN 66131), et d'une solution de nitrate de fer (II) en présence d'au moins un gaz contenant de l'oxygène à des températures de 70 à 99 °C, **caractérisée en ce que** la réaction a lieu pendant le gazage avec un gaz contenant de l'oxygène dans une plage de pH allant de pH 2,2 à pH 4,0, de préférence de pH 2,2 à pH 3,0, une suspension de pigment hématite étant formée.

**7.** Utilisation selon au moins l'une quelconque des revendications 1 à 6, **caractérisée en ce que** le type rutile est utilisé en tant que dioxyde de titane.

**8.** Préparation pigmentaire, contenant :

50 à 60 % du pigment hématite défini dans la revendication 1 et de dioxyde de titane,
8 à 25 % de liant,
0,2 à 1 % de dispersant,
0,5 à 1 % d'adjuvants,

le reste étant de l'eau.

**Fig. 1**

**Fig. 2**

EP 3 219 763 B1

**Fig. 3**

24

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5421878 A
- EP 0645437 A
- WO 2009100767 A
- US 1327061 A
- US 1368748 A
- US 2937927 A
- EP 1106577 A

- US 6503315 B
- WO 2013045608 A
- DE 19540557 A
- WO 2010012685 A
- EP 1293480 A
- DE 4235947 A